(19) **Europäisches Patentamt / European Patent Office / Office européen des brevets**

(11) **EP 4 024 297 A1**

(12) ## EUROPEAN PATENT APPLICATION
published in accordance with Art. 153(4) EPC

(43) Date of publication:
**06.07.2022 Bulletin 2022/27**

(21) Application number: **20865555.5**

(22) Date of filing: **23.06.2020**

(51) International Patent Classification (IPC):
***G06N 20/10*** (2019.01)

(52) Cooperative Patent Classification (CPC):
**G06N 20/10**

(86) International application number:
**PCT/CN2020/097651**

(87) International publication number:
**WO 2021/051917 (25.03.2021 Gazette 2021/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.09.2019 CN 201910872910
31.12.2019 CN 201911425487**

(71) Applicant: **Huawei Cloud Computing
Technologies Co., Ltd.
Guizhou 550025 (CN)**

(72) Inventors:
• **CHEN, Yi**
 **Shenzhen, Guangdong 518129 (CN)**
• **LI, Pengfei**
 **Shenzhen, Guangdong 518129 (CN)**
• **LI, Yi**
 **Shenzhen, Guangdong 518129 (CN)**
• **BAI, Xiaolong**
 **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **ARTIFICIAL INTELLIGENCE (AI) MODEL EVALUATION METHOD AND SYSTEM, AND DEVICE**

(57)    This application discloses an artificial intelligence AI model evaluation method, and relates to the AI field. The method includes: obtaining, by a computing device, an AI model and an evaluation data set, where the evaluation data set includes a plurality of pieces of evaluation data carrying labels that are used to indicate real results corresponding to the evaluation data; classifying the evaluation data in the evaluation data set based on a data feature, to obtain an evaluation data subset, where values of the data feature of all evaluation data in the evaluation data subset meet a condition; and determining an inference result of the AI model on the evaluation data in the evaluation data subset, comparing an inference result of each piece of evaluation data in the evaluation data subset with a label of each piece of evaluation data in the evaluation data subset, and calculating inference accuracy of the AI model on the evaluation data subset based on a comparison result, to obtain an evaluation result of the AI model on data whose value of the data feature meets the condition. According to the foregoing method, an evaluation result of the AI model on data of a specific classification may be obtained, and may better guide an optimization direction of the AI model.

Receive an AI model and an evaluation data set — 601

Calculate a value of a data feature of each piece of evaluation data in the evaluation data set — 602

Divide the evaluation data in the evaluation data set into at least one evaluation data subset based on the value of the data feature of each piece of evaluation data in the evaluation data set — 603

Perform inference on evaluation data in the at least one evaluation data subset by using the AI model to obtain an inference result — 604

Compare an inference result of each piece of evaluation data with a label of each piece of evaluation data, and calculate inference accuracy of the AI model on each evaluation data subset based on a comparison result, to obtain an evaluation result — 605

FIG. 6

**Description**

**TECHNICAL FIELD**

This application relates to the field of artificial intelligence (artificial intelligence, AI), and in particular, to an AI model evaluation method and system, and a device.

**BACKGROUND**

With continuous development of deep learning technologies, AI models used in different scenarios are continuously trained, for example, a trained AI model used for image classification and a trained AI model used for object recognition. A trained AI model may have some problems. For example, classification accuracy of the trained AI model used for image classification on all input images or some input images is low. Therefore, the trained AI model needs to be evaluated.

In the conventional technology, guiding evaluation cannot be performed on the AI model.

**SUMMARY**

This application discloses an AI model evaluation method and system, and a device, to more effectively evaluate an AI model.

According to a first aspect, an AI model evaluation method is disclosed. A computing device obtains an AI model and an evaluation data set that includes a plurality of pieces of evaluation data carrying labels, and classifies the evaluation data in the evaluation data set based on a data feature, to obtain an evaluation data subset, where the evaluation data subset is a subset of the evaluation data set, and values of the data feature of all evaluation data in the evaluation data subset meet a condition. The computing device further determines an inference result of the AI model on the evaluation data in the evaluation data subset, compares an inference result of each piece of evaluation data in the evaluation data subset with a label of each piece of evaluation data in the evaluation data subset, and calculates inference accuracy of the AI model on the evaluation data subset based on a comparison result, to obtain an evaluation result of the AI model on data whose value of the data feature meets the condition.

According to the foregoing method, an evaluation result of the AI model on data of a specific classification may be obtained, and the evaluation result may be used to better guide further optimization of the AI model. The label of each piece of evaluation data is used to indicate a real result corresponding to the evaluation data.

In a possible implementation, the computing device may generate an optimization suggestion for the AI model. The optimization suggestion may include: training the AI model with new data whose value of the data feature meets the condition. A more specific optimization suggestion is provided for the AI model based on the evaluation result obtained in this application. This can effectively optimize the AI model, improve an inference capability of the optimized AI model, and avoid a problem that an optimization effect is poor because a person skilled in the art optimizes the AI model based on only experience.

In a possible implementation, the computing device may generate an evaluation report including the evaluation result and/or the optimization suggestion, and send the evaluation report to a device or a system of a user. In this way, the user can learn of an evaluation result of the AI model on data of a specific classification based on the evaluation report, and optimize the AI model based on the evaluation report.

In a possible implementation, the computing device may obtain performance data, where the performance data may indicate performance of hardware that performs inference in a process of performing inference on the evaluation data by using the AI model, and/or may indicate a usage status of an operator included in the AI model in the process of performing inference on the evaluation data by using the AI model. In this way, the user learns of impact of the AI model on the hardware and the usage status of the operator in the AI model based on the performance data, and can perform corresponding optimization on the AI model based on the performance data.

In a possible implementation, the performance data may include one or more of central processing unit (central processing unit, CPU) usage, graphics processing unit (graphics processing unit, GPU) usage, used memory, used GPU memory, use duration of the operator, and a use quantity of the operator.

In a possible implementation, there may be a plurality of data features, the condition may include a plurality of sub-conditions, and the plurality of data features one-to-one correspond to the plurality of sub-conditions. When classifying the evaluation data in the evaluation data set based on the data feature to obtain the evaluation data subset, the computing device may classify the evaluation data in the evaluation data set based on the plurality of data features, to obtain an evaluation data subset. Each of values of the plurality data features of all the evaluation data in the evaluation data subset meets a corresponding sub-condition in the condition. In the foregoing method, the evaluation data set is classified based on the plurality of data features, and an evaluation result of the AI model on data of a specific classification may be obtained. The evaluation result may be used to better guide a further optimization direction of the AI model.

In a possible implementation, the computing device may determine an inference result of the AI model on the evaluation data in the evaluation data set, and calculate inference accuracy of the AI model on the evaluation data set based on a comparison result of the inference result on the evaluation data in the evaluation data set and the label of the evaluation data in the evaluation data set, to obtain an evaluation result of the AI model on the global data. The foregoing method can visually obtain an overall inference capability of the AI model for the global data.

In a possible implementation, the evaluation data in the evaluation data set may be images, or may be audio.

According to a second aspect, an AI model evaluation system is disclosed, and the system includes:

an input/output (input output, I/O) module, configured to obtain an AI model and an evaluation data set, where the evaluation data set includes a plurality of pieces of evaluation data carrying labels, and a label of each piece of evaluation data is used to indicate a real result corresponding to the evaluation data;
a data analysis module, configured to classify the evaluation data in the evaluation data set based on a data feature, to obtain an evaluation data subset, where the evaluation data subset is a subset of the evaluation data set, and values of the data feature of all evaluation data in the evaluation data subset meets a condition; and
an inference module, configured to determine an inference result of the AI model on the evaluation data in the evaluation data subset, where
the data analysis module is further configured to compare an inference result of each piece of evaluation data in the evaluation data subset with a label of each piece of evaluation data in the evaluation data subset, and calculate inference accuracy of the AI model on the evaluation data subset based on a comparison result, to obtain an evaluation result of the AI model on data whose value of the data feature meets the condition.

In a possible implementation, the system further includes:

a diagnosis module, configured to generate an optimization suggestion for the AI model, where the optimization suggestion includes: training the AI model with new data whose value of the data feature meets the condition.

In a possible implementation, the diagnosis module is further configured to generate an evaluation report, where the evaluation report includes the evaluation result and/or the optimization suggestion; and
the I/O module is further configured to send the evaluation report.

In a possible implementation, the system further includes:

a performance monitoring module, configured to obtain performance data, where the performance data is used to indicate performance of hardware that performs inference in a process of performing inference on the evaluation data by using the AI model, or a usage status of an operator included in the AI model in a process of performing inference on the evaluation data by using the AI model.

In a possible implementation, the performance data includes one or more of the following data: central processing unit CPU usage, of a graphics processing unit GPU usage, used memory, used GPU memory, use duration of the operator, and a use quantity of the operator.

In a possible implementation, the inference module is further configured to determine an inference result of the AI model on the evaluation data in the evaluation data set.

The system further includes:

a model analysis module, configured to calculate inference accuracy of the AI model on the evaluation data set based on a comparison result of the inference result on the evaluation data in the evaluation data set and the label of the evaluation data in the evaluation data set, to obtain an evaluation result of the AI model on the global data.

In a possible implementation, there are a plurality of data features, the condition includes a plurality of sub-conditions, and the plurality of data features one-to-one correspond to the plurality of sub-conditions; and
the data analysis module is specifically configured to classify the evaluation data in the evaluation data set based on the plurality of data features to obtain an evaluation data subset, where each of values of the plurality data features of all the evaluation data in the evaluation data subset meets a corresponding sub-condition in the condition.

In a possible implementation, the evaluation data in the evaluation data set is images or audio.

According to a third aspect, a computing device is disclosed. The computing device includes a memory and a processor, and the memory is configured to store a group of computer instructions. The processor executes the group of computer instructions stored in the memory, so that the computing device performs the method disclosed in the first aspect or any possible implementation of the first aspect.

According to a fourth aspect, a computer-readable storage medium is disclosed. The computer-readable storage medium stores computer program code, and when the computer program code is executed by a computing device, the computing device is enabled to perform the method disclosed in the first aspect or any possible implementation of the first aspect. The storage medium includes but is not limited to a volatile memory, for example, a random access memory, or a nonvolatile memory, such as a flash memory, a hard disk drive (hard disk drive, HDD), and a solid state drive (solid state drive, SSD).

According to a fifth aspect, a computer program product is disclosed. The computer program product includes computer program code, and when the computer program code is executed by a computing device, the computing device is enabled to perform the method disclosed in the first aspect or any possible implementation of the first aspect. The computer program product may be a software installation package. When the method disclosed in the first aspect or any possible implementation of the first aspect needs to be used, the computer program product may be downloaded to and executed on the computing device.

According to a sixth aspect, an AI model evaluation method is disclosed. A computing device may obtain an AI model and an evaluation data set that includes a plurality of pieces of evaluation data carrying labels, perform inference on the evaluation data in the evaluation data set by using the AI model, obtain performance data, and generate an optimization suggestion for the AI model based on the performance data. In the foregoing method, a more specific optimization suggestion is provided for the AI model based on the performance data obtained in the evaluation method in this application, to avoid a problem that an optimization effect is poor because a person skilled in the art optimizes the AI model based on only experience. The performance data is used to indicate performance of hardware that performs inference in a process of performing inference on the evaluation data by using the AI model, or a usage status of an operator included in the AI model in a process of performing inference on the evaluation data by using the AI model. The optimization suggestion may include: adjusting a structure of the AI model, or performing optimization training on the operator in the AI model.

In a possible implementation, the computing device may generate an evaluation report including the performance data and/or the optimization suggestion, and send the evaluation report, so that a user can learn of, based on the evaluation report, a data feature-based inference capability of the AI model, and optimize the AI model based on the evaluation report.

In a possible implementation, the usage status of the operator included in the AI model in the process in which the AI model performs inference on the evaluation data includes: use duration of the operator in the AI model, and a use quantity of the operator in the AI model.

In a possible implementation, the usage status of the operator included in the AI model in the process of performing inference on the evaluation data by using the AI model includes one or more of CPU usage, GPU usage, used memory, and used GPU memory.

In a possible implementation, the computing device may determine an inference result of the AI model on the evaluation data in the evaluation data set, and calculate inference accuracy of the AI model on the evaluation data set based on a comparison result of the inference result on the evaluation data in the evaluation data set and the label of the evaluation data in the evaluation data set, to obtain an evaluation result of the AI model on the global data. The foregoing method can visually obtain an overall inference capability of the AI model for the global data.

In a possible implementation, the evaluation data in the evaluation data set may be images, or may be audio.

According to a seventh aspect, an AI model evaluation system is disclosed, and the system includes:

an I/O module, configured to obtain an AI model and an evaluation data set, where the evaluation data set includes a plurality of pieces of evaluation data carrying labels, and a label of each piece of evaluation data is used to indicate a real result corresponding to the evaluation data;
an inference module, configured to perform inference on the evaluation data in the evaluation data set by using the AI model;
a performance monitoring module, configured to obtain performance data, where the performance data is used to indicate performance of hardware that performs inference in a process of performing inference on the evaluation data by using the AI model, or a usage status of an operator included in the AI model in a process of performing inference on the evaluation data by using the AI model; and
a diagnosis module, configured to generate an optimization suggestion for the AI model based on the performance data, where the optimization suggestion includes: adjusting a structure of the AI model, or performing optimization training on the operator in the AI model.

In a possible implementation, the diagnosis module is further configured to generate an evaluation report, where the evaluation report includes the performance data and/or the optimization suggestion; and
the I/O module is further configured to send the evaluation report.

In a possible implementation, the usage status of the operator included in the AI model in the process in which the AI model performs inference on the evaluation data includes: use duration of the operator in the AI model, and a use quantity of the operator in the AI model.

In a possible implementation, the usage status of the operator included in the AI model in the process of performing inference on the evaluation data by using the AI model includes one or more of CPU usage, GPU usage, used memory, and used GPU memory.

In a possible implementation, the inference module is further configured to determine an inference result of the AI model on the evaluation data in the evaluation data set.

The system further includes:

a model analysis module, configured to calculate inference accuracy of the AI model on the evaluation data set based on a comparison result of the inference result on the evaluation data in the evaluation data set and the label of the evaluation data in the evaluation data set, to obtain an evaluation result of the AI model on the global data.

In a possible implementation, the evaluation data in the evaluation data set is images or audio.

According to an eighth aspect, a computing device is disclosed. The computing device includes a memory and a processor, and the memory is configured to store a group of computer instructions. The processor executes the group of computer instructions stored in the memory, so that the computing device performs the method disclosed in the sixth aspect or any possible implementation of the sixth aspect.

According to a ninth aspect, a computer-readable storage medium is disclosed. The computer-readable storage medium stores computer program code, and when the computer program code is executed by a computing device, the computing device is enabled to perform the method disclosed in the sixth aspect or any possible implementation of the sixth aspect. The storage medium includes but is not limited to a volatile memory, for example, a random access memory, or a nonvolatile memory, such as a flash memory, a hard disk drive (hard disk drive, HDD), and a solid state drive (solid state drive, SSD).

According to a tenth aspect, a computer program product is disclosed. The computer program product includes computer program code, and when the computer program code is executed by a computing device, the computing device is enabled to perform the method disclosed in the sixth aspect or any possible implementation of the sixth aspect. The computer program product may be a software installation package. When the method disclosed in the sixth aspect or any possible implementation of the sixth aspect needs to be used, the computer program product may be downloaded to and executed on the computing device.

## BRIEF DESCRIPTION OF DRAWINGS

FIG. 1 is a schematic diagram of a system architecture 100 according to an embodiment of this application;

FIG. 2 is a schematic diagram of another system architecture 200 according to an embodiment of this application;

FIG. 3 is a schematic diagram of deployment of an evaluation system according to an embodiment of this application;

FIG. 4 is a schematic diagram of deployment of another evaluation system according to an embodiment of this application;

FIG. 5 is a schematic diagram of a structure of an evaluation system according to an embodiment of this application;

FIG. 6 is a schematic flowchart of an AI model evaluation method according to an embodiment of this application;

FIG. 7 is a schematic diagram of a task creation interface according to an embodiment of this application;

FIG. 8 is a schematic flowchart of another AI model evaluation method according to an embodiment of this application;

FIG. 9 is a distribution diagram of brightness of bounding boxes for microbial detection according to an embodiment of this application;

FIG. 10 is a distribution diagram of area ratios of a bounding box to an image for microbial detection according to an embodiment of this application;

FIG. 11 is a schematic diagram of mAP before and after retraining of a model corresponding to microbial cells according to an embodiment of this application;

FIG. 12 shows a curve of an FI score and a confidence threshold of an AI model used for safety helmet detection according to an embodiment of this application;

FIG. 13 shows a P-R curve of an AI model used for safety helmet detection according to an embodiment of this application;

FIG. 14 is a schematic diagram of a structure of another evaluation system 1500 according to an embodiment of this application;

FIG. 15 is a schematic diagram of a structure of still another evaluation system 1600 according to an embodiment of this application;

FIG. 16 is a schematic diagram of a structure of a computing device according to an embodiment of this application; and

FIG. 17 is a schematic diagram of a structure of another computing device according to an embodiment of this application.

## DESCRIPTION OF EMBODIMENTS

Embodiments of this application disclose an artificial intelligence (artificial intelligence, AI) model evaluation method and system, and a device, to effectively evaluate an AI model. Details are separately described in the following.

At present, AI attracts extensive attention from academia and industry, and has played a level beyond ordinary humans in many application fields. For example, an application of the AI technology in a machine vision field (such as face recognition, image classification, and object detection) makes machine vision more accurate than humans, and the AI technology also has a good application in a field such as a natural language processing and recommendation system.

Machine learning is a core means to implement AI. A computer constructs an AI model based on existing data for a to-be-resolved technical problem, and then performs inference on unknown data by using the AI model to obtain an inference result. In this method, the computer learns an ability (for example, cognitive ability, discriminative ability, and classification ability) like humans. Therefore, this method is referred to as machine learning.

Various AI models (for example, a neural network (neural network) model) are used to implement applications of the AI through machine learning. The AI model is a mathematical algorithm model that resolves a practical problem by using a machine learning idea. The AI model includes a large quantity of parameters and calculation formulas (or calculation rules). The parameters in the AI model are values obtained by training the AI model by using a data set. For example, the parameters in the AI model are weights of the calculation formulas or factors in the AI model. The AI model may be divided into a plurality of layers or a plurality of nodes. Each layer or each node includes one type of calculation rule and one or more parameters (used to represent a mapping, relationship, or transformation). The calculation rule and the one or more parameters used by each layer or each node in the AI model are referred to as an operator (operator). An AI model may include a large quantity of operators. For example, in a neural network, an operator may be one-layer structure, and may be a convolutional layer, a pooling layer, or a fully connected layer. The convolutional layer is used for feature extraction. The pooling layer is used for downsampling. The fully connected layer is used for feature extraction or classification. The AI model includes a deep convolutional neural network, a residual network (residual network, ResNet), a visual geometry group (visual geometry group, VGG) network, an Inception network, a fast (Faser)-region-based convolutional neural network (region-based convolutional neural networks, R-CNN), a single shot multibox detector (single shot multibox detector, SSD) network, a you only look once (you only look once, YOLO) network, and the like.

Before an AI model is used in a specific application scenario to resolve a technical problem, an initial AI model needs to be trained first, and then a trained AI model is evaluated. Then, it is determined, based on an evaluation result, whether the AI model needs to be further optimized, and the AI model is evaluated after the optimization. The AI model can be used only when the evaluation result of the AI model is good. With continuous development of deep learning, an AI platform is gradually formed. The AI platform is a system that provides services such as training, evaluation, and optimization of AI models for users such as individuals or enterprises. The AI platform may receive requirements and data of the users through an interface, train and optimize various AI models that meet a user requirement, evaluate performance of the AI models for the users, and further optimize the AI models for the users based on evaluation results.

Currently, after the AI platform trains an initial AI model to obtain an AI model, the AI platform performs inference on an evaluation data set by using the AI model to obtain an inference result. Then, the AI platform may determine, based on the inference result and a label of evaluation data in the evaluation data set, accuracy of the inference result of the AI model on the evaluation data set. The accuracy is used to indicate similarity between the inference result of the AI model on the evaluation data in the evaluation data set and a real result of the evaluation data in the evaluation data set. The accuracy may be measured by many indicators, for example, an accuracy rate and recall. In the foregoing method, research and development personnel can obtain only a value of the accuracy of the inference result of the AI model on the entire evaluation data set, and cannot obtain more specific information, for example, impact of a data feature on the inference result of the AI model. Consequently, the evaluation result is relatively general, and cannot provide more information for further optimization of the AI model.

The inference is a process of predicting the evaluation data in the evaluation data set by using the AI model. For example, when a task type is face recognition, inference may be recognizing, by using an AI model, a person name corresponding to a face in an image in the evaluation data set. Specifically, the AI model may be invoked by using inference code to perform inference on the evaluation data in the evaluation data set. The inference code may include invoking code used to invoke the AI model to perform inference on the evaluation data in the evaluation data set. The inference code may further include preprocessing code used to preprocess the evaluation data in the evaluation data set. Then the AI model is invoked by using the invoking code to perform inference on the preprocessed evaluation data in the evaluation data set. The inference code may further include post-processing code used to perform further processing such as statistical analysis on an inference result.

A data feature is abstraction of a characteristic or a feature of data, and is used to represent the characteristic or the feature of the data. For example, when the evaluation data is an image, the data feature may be an aspect ratio of the image, hue of the image, resolution of the image, blurriness of the image, brightness of the image, and saturation of the image. Different data corresponds to different data feature values in a same data feature. A plurality of pieces of data may be classified based on the data feature, and data in each classification is data that has a similar data feature. For example, if aspect ratios of images in different sizes are different, values of aspect ratios of 10 images may be separately calculated, to obtain a set of values of aspect ratios of the images: [0.4, 0.3, 0.35, 0.9, 0.1, 1.2, 1.4, 0.3, 0.89, 0.7]. The images may be classified into three classifications based on the aspect ratios of the images. One classification is images whose aspect ratios are [0-0.5], and includes five images in total. One classification is images whose aspect ratios are (0.5-1], and includes three images in total. The other classification is images whose aspect ratios are (1-1.5], and includes two images in total.

The embodiments of this application disclose an AI model evaluation method and system, and a device. The method may obtain an evaluation result of an AI model on data of a specific classification, so that the evaluation result can be used to more effectively guide further optimization of the AI model.

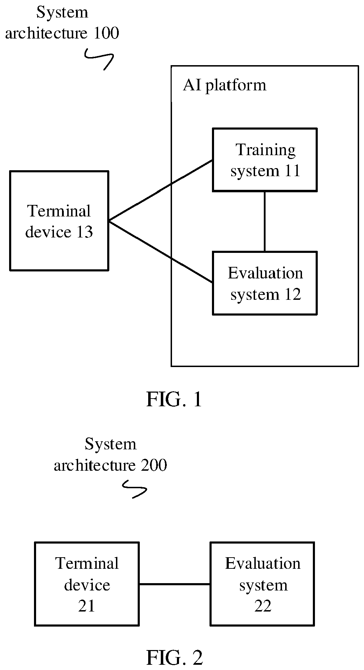

To better understand the AI model evaluation method and system, and the device disclosed in the embodiments of this application, the following first describes a system architecture used in the embodiments of this application. FIG. 1 is a schematic diagram of a system architecture 100 according to an embodiment of this application. As shown in FIG. 1, the system architecture 100 may include a training system 11, an evaluation system 12, and a terminal device 13. The training system 11 and the evaluation system 12 may provide AI model training and evaluation services for a user through an AI platform.

The training system 11 is configured to receive a training data set sent by the user by using the terminal device 13, train an initial AI model based on the training data set, and send a trained AI model to the evaluation system 12.

Optionally, the training system 11 is further configured to receive a task type entered or selected by the user on the AI platform by using the terminal device 13, and determine the initial AI model based on the task type.

Optionally, the training system 11 is further configured to send the received task type to the evaluation system 12.

Optionally, the training system 11 is further configured to receive the initial AI model uploaded by the user by using the terminal device 13.

The evaluation system 12 is configured to receive the AI model from the training system 11, receive an evaluation data set uploaded by the user by using the terminal device 13, perform inference on the evaluation data set by using the AI model to obtain an inference result, generate, based on the evaluation data set and the inference result, an evaluation report including an evaluation result and/or an optimization suggestion for the AI model, and send the evaluation report to the terminal device 13.

Optionally, the evaluation system 12 is further configured to receive the task type from the training system 11.

Optionally, the evaluation system 12 is further configured to receive the task type entered or selected by the user on the AI platform by using the terminal device 13.

The terminal device 13 is configured to send data and information to the training system 11 and the evaluation system 12 based on an operation of the user, or receive information sent by the training system 11 or the evaluation system 12.

FIG. 2 is a schematic diagram of another system architecture 200 according to an embodiment of this application. As shown in FIG. 2, the system architecture 200 may include a terminal device 21 and an evaluation system 22.

The terminal device 21 is configured to send a trained AI model, an evaluation data set, and inference code to the evaluation system 22 based on an operation of a user.

The evaluation system 22 is configured to receive the trained AI model, the evaluation data set, and the inference code from the terminal device 21, invoke, by using the inference code, the AI model to perform inference on evaluation data in the evaluation data set to obtain an inference result, generate, based on the evaluation data set and the inference result, an evaluation report including an evaluation result and an optimization suggestion for the AI model, and send the evaluation report to the terminal device 21.

Optionally, the evaluation system 22 is further configured to receive a task type sent by the user by using the terminal device 21.

It should be understood that, in some embodiments, the AI model evaluation method provided in this application is performed by an evaluation system. For example, the evaluation system may be the evaluation system 12 or the evaluation system 22.

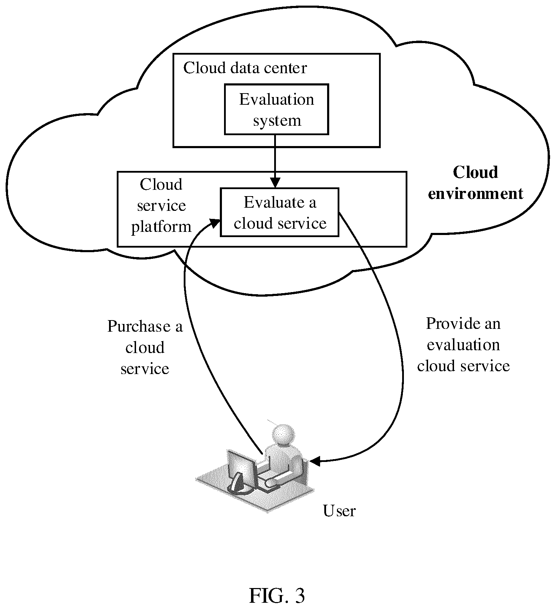

FIG. 3 is a schematic diagram of deployment of an evaluation system according to an embodiment of this application. As shown in FIG. 3, the evaluation system may be deployed in a cloud environment. The cloud environment is an entity that uses a basic resource to provide a cloud service for a user in a cloud computing mode. The cloud environment includes a cloud data center and a cloud service platform. The cloud data center includes a large quantity of basic resources (including a compute resource, a storage resource, and a network resource) owned by a cloud service provider. The compute resources included in the cloud data center may be a large quantity of computing devices (for example, servers). The evaluation system may be independently deployed on a server or a virtual machine in the cloud data center, or the evaluation system may be deployed on a plurality of servers in the cloud data center in a distributed manner, or may be deployed on a plurality of virtual machines in the cloud data center in a distributed manner, or may be deployed on servers and virtual machines in the cloud data center in a distributed manner. As shown in FIG. 3, the evaluation system is abstracted by the cloud service provider into an evaluation cloud service on the cloud service platform to provide for a user. After the user purchases the cloud service on the cloud service platform (the cloud service can be pre-recharged and then settled based on a final usage status of resources), the cloud environment provides the evaluation cloud service for the user by using the evaluation system deployed in the cloud data center. It should be understood that a function provided by the evaluation system may also be abstracted into a cloud service together with a function provided by another system. For example, the cloud service provider abstracts a function provided by the evaluation system for evaluating an AI model and a function provided by a training system for training an initial AI model into an AI platform cloud service.

The evaluation system may alternatively be deployed in an edge environment. The edge environment is a set of data centers or edge computing devices closer to a user. The edge environment includes one or more edge computing devices. The evaluation system may be independently deployed on an edge computing device, or the evaluation system may be deployed on a plurality of edge servers in a distributed manner, or may be deployed on a plurality of edge sites with computing power in a distributed manner, or may be deployed on edge servers and edge sites with computing power in a distributed manner. In addition, the evaluation system may be deployed in another environment, for example, a terminal computing device cluster. The evaluation system may be a software system that is run on a computing device such as a server. The evaluation system may alternatively be a background system of an AI platform. On the AI platform, the evaluation system may be an AI model evaluation service, and the AI model evaluation service is provided by the background of the evaluation system.

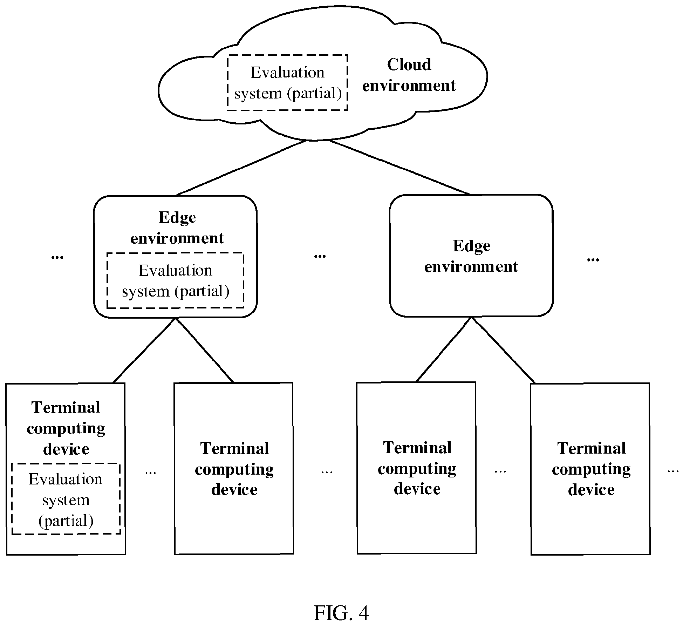

FIG. 4 is a schematic diagram of deployment of another evaluation system according to an embodiment of this application. As shown in FIG. 4, the evaluation system provided in this application may alternatively be deployed in different environments in a distributed manner. The evaluation system provided in this application may be logically divided into a plurality of parts, and each part has a different function. The parts of the evaluation system may be deployed in any two or three of a terminal computing device, the edge environment, and the cloud environment. The terminal computing device includes a terminal server, a smartphone, a notebook computer, a tablet computer, a personal desktop computer, an intelligent camera, and the like. The edge environment is an environment that includes a set of edge computing devices that are relatively close to the terminal computing device, and the edge computing device includes: an edge server, an edge station with computing power, and the like. The various parts of the evaluation system deployed in the different environments or devices cooperate to implement an AI model evaluation function. It should be understood that, in this embodiment of this application, a specific environment in which some parts of the evaluation system are deployed is not limited. In actual application, adaptive deployment may be performed based on a computing capability of the terminal computing device, a resource occupation status of the edge environment and the cloud environment, or a specific application requirement.

In some embodiments, the AI platform includes a training system and an evaluation system. The training system and the evaluation system may be deployed in a same environment, such as the cloud environment, the edge environment, or the like. The training system and the evaluation system may alternatively be deployed in different environments. For example, the training system is deployed in the cloud environment, and the evaluation system is deployed in the edge environment. The training system and the evaluation system may be independently deployed, or may be deployed in a distributed manner.

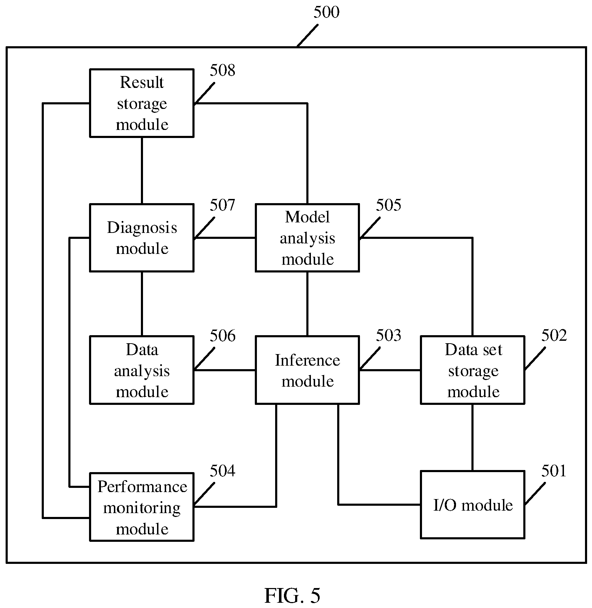

FIG. 5 is a schematic diagram of a structure of an evaluation system 500 according to an embodiment of this application. As shown in FIG. 5, the evaluation system 500 may include an input/output (input output, I/O) module 501, a data set storage module 502, an inference module 503, a performance monitoring module 504, a model analysis module 505, a data analysis module 506, a diagnosis module 507, and a result storage module 508. The evaluation system 500 may include all or some of the modules described above. The following first describes functions of the modules in the evaluation system 500.

The I/O module 501 is configured to: receive an AI model sent by a training system or a terminal device, receive an evaluation data set and inference code that are uploaded by a user by using the terminal device, and send an evaluation report to the terminal device.

Optionally, the I/O module 501 is further configured to receive a task type uploaded by the user by using the terminal device.

The data set storage module 502 is configured to store the received evaluation data set.

The inference module 503 is configured to use the AI model to perform inference on the evaluation data set stored or received by the data set storage module 502.

The performance monitoring module 504 is configured to: in a process in which the inference module 503 performs inference, monitor use information of hardware resources, and use duration and a use quantity of an operator included in the AI model in an AI model inference process. The use quantity of the operator is a quantity of times that the operator is used in the process in which the inference module 503 performs inference. The use duration of the operator is total duration and/or average duration used by each operator in the process in which the inference module 503 performs inference.

The model analysis module 505 is configured to calculate accuracy of an inference result of the AI model on evaluation data in the evaluation data set based on an inference result of the inference module 503 and a label of the evaluation data in the evaluation data set.

The data analysis module 506 is configured to: calculate values of one or more data features of the evaluation data in the evaluation data set in the data features; classify the evaluation data in the evaluation data set based on the values of the data features to obtain at least one evaluation data subset; and calculate accuracy of the AI model on evaluation data in each evaluation data subset based on the inference result of the inference module 503 and a label of each evaluation data subset.

The diagnosis module 507 is configured to generate an evaluation report based on any one or more of a monitoring result of the performance monitoring module 504, an analysis result of the model analysis module 505, and an analysis result of the data analysis module 506.

The result storage module 508 is configured to store the monitoring result of the performance monitoring module 504, the analysis result of the model analysis module 505, the analysis result of the data analysis module 506, and a diagnosis result of the diagnosis module 507.

Because of functions of the modules, the evaluation system provided in the embodiments of this application may provide a user with an AI model evaluation service, and the evaluation system may deeply analyze analysis results such as impact of different data features on the AI model to further provide the user with an AI model optimization suggestion.

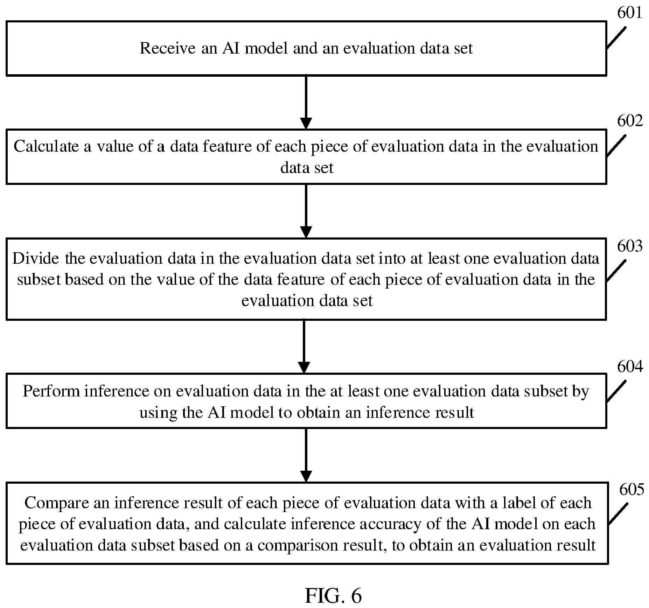

Based on the system architecture shown in FIG. 1 or FIG. 2, FIG. 6 is a schematic flowchart of an AI model evaluation method according to an embodiment of this application. The AI model evaluation method is performed by an evaluation system. Because the evaluation system is deployed on a computing device independently or in a distributed manner, the AI model evaluation method is performed by the computing device. To be specific, the AI model evaluation method in this application may be performed by a processor in the computing device by executing computer instructions stored in a memory. As shown in FIG. 6, the AI model evaluation method may include the following steps.

601: Receive an AI model and an evaluation data set.

The AI model is a trained model, and the AI model may be sent by a training system, or may be uploaded by a user by using a terminal device.

The evaluation data set may include a plurality of pieces of evaluation data and labels of the plurality of pieces of evaluation data, each piece of evaluation data corresponds to one or more labels, and the labels are used to represent real results corresponding to the evaluation data. The plurality of pieces of evaluation data are in a same type, and may be images, videos, audio, text, or the like. Evaluation data of different task types in the evaluation data set may be different or the same. For example, when a task type is image classification or object detection, the evaluation data in the evaluation data set is images, and when a task type is voice recognition, the evaluation data in the evaluation data set is audio. The label is used to indicate a real result corresponding to the evaluation data. Forms of labels of different task types and different evaluation data are also different. For example, when the evaluation data is images and the task type is to recognize a type of a target in the images, the label of the evaluation data is a real type of the target. For another example, when the evaluation data is images and the task type is to detect a target in the images, the label may be a detection box corresponding to the target in the evaluation image. A shape of the detection box may be a rectangle, may be a circle, may be a straight line, or may be another shape. This is not limited herein. That is, a label is actually a value with a specific meaning and is a value associated with labeled evaluation data. This value may represent a type, a location, or others of the labeled evaluation data. For another example, when the evaluation data is audio, the label may indicate that the audio is of an audio type such as pop music or classical music. Each of the plurality of pieces of evaluation data may correspond to one label, or may correspond to a plurality of labels.

Different AI models may be used in different application scenarios, and a same AI model may also be used in different application scenarios. In different application scenarios of the AI model, task types of the AI model may be different. Because the task types of the AI model are different, evaluation indicators and data features of the AI model are different. Therefore, after the AI model is obtained, an evaluation indicator and a data feature of a task type of the AI model may be obtained. That is, the evaluation indicator and the data feature corresponding to the task type of the AI model are obtained. When the evaluation system includes a plurality of task types, and a corresponding evaluation indicator and data feature are set for each task type, the evaluation indicator and the data feature of the task type of the AI model may be obtained. When the evaluation system includes one task type, an evaluation indicator and a data feature of the task type may be obtained. An evaluation indicator of one task type may include at least one evaluation indicator, and a data feature of one task type may include at least one data feature. A data feature is abstraction of a data characteristic. There may be one or more data features, and each data feature is used to represent one aspect of feature of the evaluation data in the evaluation data set.

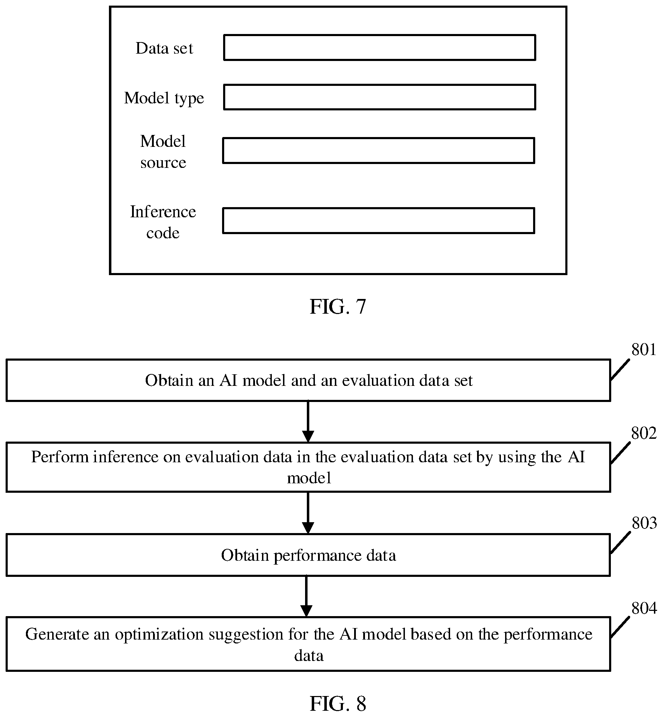

When the evaluation system includes a plurality of task types, the task types may be entered or selected by the user in advance through an I/O module in the evaluation system. FIG. 7 is a schematic diagram of a task creation interface according to an embodiment of this application. As shown in FIG. 7, the task creation interface may include a data set, a model type, a model source, and inference code. In addition, the task creation interface may further include other content, and this is not limited herein. A box behind the data set may be used by the user to upload the evaluation data set, or may be used by the user to enter a storage path of the evaluation data set. A box behind the model type may be used by the user to select the task type of the AI model from stored task types, or may be used by the user to enter the task type of the AI model. A box behind the model source may be used by the user to upload the AI model, or may be used by the user to enter a storage path of the AI model. A box behind the inference code may be used by the user to upload the inference code, or may be used by the user to enter a storage path of the inference code. It can be learned that, after a task is created, the task type of the AI model is determined. The inference code is used to invoke the AI model to perform inference on the evaluation data set. The inference code may include invoking code, which may invoke the AI model to perform inference on the evaluation data set. The inference code may further include preprocessing code, and the preprocessing code is used to preprocess the evaluation data in the evaluation data set. Then the AI model is invoked by using the invoking code to perform inference on the preprocessed evaluation data set. The inference code may further include post-processing code, and the post-processing code is used to process a result of the inference to obtain an inference result.

602: Calculate a value of a data feature of each piece of evaluation data in the evaluation data set.

After receiving the AI model and the evaluation data set, the value of the data feature of each piece of evaluation data in the evaluation data set may be calculated. To be specific, the value of the data feature of each piece of evaluation data in the evaluation data set is calculated based on the plurality of pieces of evaluation data included in the data set and the labels of the plurality of pieces of evaluation data. A value of a data feature is a value used to measure the data feature. There may be one or more data features. When there are a plurality of data features, a value of each of the plurality of data features of each piece of evaluation data in the evaluation data set may be calculated.

When the task type is image classification, each piece of evaluation data in the evaluation data set is an image, and the data features may include a common image feature such as an aspect ratio of the image, a mean value and a standard deviation of RGB of all images, a color of the image, resolution of the image, blurriness of the image, brightness of the image, and saturation of the image. The aspect ratio of the image is a ratio of a width to a height of the image, and the aspect ratio AS of the image may be represented as follows:

$$AS = \frac{ImageW}{ImageH}.$$

ImageH is the height of the image, and ImageW is the width of the image. The mean value of the RGB of all the images is a mean value of R channel values, a mean value of G channel values, and a mean value of B channel values in all the images included in the evaluation data set. A mean value $T_{mean}$ of RGB of all the images may be represented as follows:

$$T_{mean} = \frac{(R,G,B)_1 + (R,G,B)_2 + \cdots + (R,G,B)_n}{n},$$

where
n is a quantity of images included in the evaluation data set. R in $(R, G, B)_i$ is a sum of R channel values of all pixels in the $i^{th}$ image included in the evaluation data set, G in $(R, G, B)_i$ is a sum of G channel values of all the pixels in the $i^{th}$ image included in the evaluation data set, and B in $(R, G, B)_i$ is a sum of B channel values of all the pixels in the $i^{th}$ image included in the evaluation data set. The mean value of RGB of all the images may be split into the following three formulas:

$$T_{mean,R} = \frac{R_1 + R_2 + \cdots + R_n}{n};$$

$$T_{mean,G} = \frac{G_1 + G_2 + \cdots + G_n}{n};$$

and

$$T_{mean,B} = \frac{B_1 + B_2 + \cdots + B_n}{n}.$$

$T_{mean,R}$ is a mean value of R channel values of the n images, $T_{mean,G}$ is a mean value of G channel values of the n images, and $T_{mean,B}$ is a mean value of B channels of the n images. $R_i$ is the sum of the R channel values of all the pixels in the $i^{th}$ image included in the evaluation data set, $G_i$ is the sum of the G channel values of all the pixels in the $i^{th}$ image included in the evaluation data set, $B_i$ is the sum of the B channel values of all the pixels in the $i^{th}$ image included in the evaluation data set. The standard deviation $T_{STD}$ of RGB of all the images may be represented as follows:

$$T_{STD} = \frac{1}{n}\sum_{i=1}^{n}\left( (R, G, B)_i - T_{mean}\right)^2.$$

The color of the image is rich in colors of the image, and the color CO of the image may be represented as follows:

$$CO = \sqrt{(STD(|R - G|))^2 + (STD(|0.5 * (R + G) - B|))^2 +}$$

$$0.3 * \sqrt{(mean(|R - G|))^2 + (mean(|0.5 * (R + G) - B|))^2}.$$

STD () is to calculate a standard deviation of content in the parentheses. The resolution of the image is a quantity of pixels included in a unit inch. The blurriness of the image is a blur degree of the image. The brightness of the image is brightness of a picture in the image, and the brightness BR of the image may be represented as follows:

$$BR = \sqrt{0.24 * (mean_B)^2 + 0.691 * (mean_G)^2 + 0.068 * (mean_R)^2}.$$

The saturation of the image is purity of a color in the image, and the saturation SA of the image may be represented as follows:

$$SA = \frac{1}{m}\sum_{j=1}^{m}\left(\frac{max(R,G,B)_j - min(R,G,B)_j}{max(R,G,B)_j}\right),$$

where
m is a quantity of pixels included in an image, $max(R, G, B)_j$ is a maximum value in an R channel value, a G channel value, and a B channel values of the $j^{th}$ pixel in the image, and $min(R, G, B)_j$ is a minimum value in the R channel value, the G channel value, and the B channel values of the $j^{th}$ pixel in the image.

When the task type is object detection, each piece of evaluation data in the evaluation data set is an image, and the data features may include bounding box-based features such as a quantity of bounding boxes, an area ratio of a bounding box to the image, an area variance of the bounding box, a degree of a distance from the bounding box to an image edge, an overlapping degree of bounding boxes, and an aspect ratio of the image, and resolution of the image, blurriness of the image, brightness of the image, saturation of the image, and the like. The bounding box is a label of a training image in the training data set. In the training image, one or more types of to-be-recognized objects are labeled by using a bounding box, so that in an AI model training process, the AI model learns a feature of an object in the bounding box in the training image, and the AI model has a capability of detecting the one or more types of objects in the image. The area ratio of the bounding box to the image is a ratio of an area of the bounding box to an area of the image. The area ratio AR of the bounding box to the image may be represented as follows:

$$AR = \frac{BboxW * BboxH}{ImageW * ImageH}.$$

BboxW is a width of the bounding box, that is, the width of the bounding box corresponding to the label included in the evaluation data. BboxH is a height of the bounding box, that is, the height of the bounding box corresponding to the label included in the evaluation data. The overlapping degree of the bounding box is a ratio of a part that is of the bounding box and that is covered by another bounding box to the bounding box. The overlapping degree OV of the bounding box may be represented as follows:

$$OV = min(1, \frac{\sum_{k=1}^{M} area(C \cap G_k)}{area(C)}).$$

M is a difference between the quantity of bounding boxes included in the image and 1, and C is a region of a target box in the bounding boxes included in the image, area(C) is an area of the target box, $G_k$ is a region of the $k^{th}$ bounding box other than the target box in the bounding boxes included in the image, $C \cap G_k$ is an overlapping region between the region of the target bounding box and the region of the $k^{th}$ bounding box, and $area(C \cap G_k)$ is an area of the overlapping region between the region of the target bounding box and the region of the $k^{th}$ bounding box. The degree MA of the distance from the bounding box to the image edge may be represented as follows:

$$MA = \min\left(\frac{|imgy-y|}{\max(imgy,y)}, \frac{|imgx-x|}{\max(imgx,x)}\right),$$

where

imgx is a coordinate of a central point of the image on an x-axis, imgy is a coordinate of the central point of the image on a y-axis, x is a coordinate of a central point of the bounding box in the image on the x-axis, and y is a coordinate of the central point of the bounding box in the image on the y-axis.

When the task type is text classification in a natural language, the data features may include a quantity of words, a quantity of non-repeated words, a length, a quantity of stop words, a quantity of punctuations, a quantity of title-style words, a mean length of the words, term frequency (term frequency, TF), inverse document frequency (inverse document frequency, UDF), and the like. The quantity of words is used to count a quantity of words in each line of text (text). The quantity of non-repeated words is used to count a quantity of words that appear only once in each line of text. The length is used to count storage space (including spaces, symbols, letters, and the like) occupied by a length of each line of text. The quantity of stop words is used count a quantity of words such as between (between), but (but), about (about), and very (very). The quantity of punctuations is used to count a quantity of punctuations included in each line of text. A quantity of uppercase words is used to count a quantity of uppercase words. The quantity of title-style words is used to count a quantity of words whose first letters are uppercase and other letters are lowercase. The mean length of the word is used to count a mean length of words in each line of text.

When the task type is sound classification in audio, the data features may include a short time average zero crossing rate (zero crossing rate), short time energy (energy), entropy of energy (entropy of energy), a spectrum centroid (spectral centroid), a spectral spread (spectral spread), spectral entropy (spectral entropy), spectral flux (spectral flux), and the like. The short time average zero crossing rate is a quantity of times that a signal crosses the zero point in each frame of signal and is used to reflect a frequency characteristic. The short time energy is a sum of squares of each frame of signal and is used to reflect a strength of signal energy. The entropy of energy is similar to the spectral entropy (spectral entropy) of the spectrum, but the entropy of energy describes time domain distribution of a signal and is used to reflect continuity. The spectrum centroid is alternatively referred to as a first-order distance of a spectrum. A smaller value of the spectrum centroid indicates that more spectrum energy is concentrated in a low frequency range. For example, a spectrum centroid of voice (voice) is usually lower than that of music (music). The spectrum spread is alternatively referred to as a second-order center distance of a spectrum and describes distribution of a signal around a center of the spectrum. For the spectral entropy, it can be learned from a characteristic of entropy that greater entropy indicates more uniform distribution. The spectral entropy reflects uniformity of each frame of signal. For example, a spectrum of a speaker is non-uniform due to formant, and a spectrum of white noise is more uniform. Voice activity detection (voice activity detection, VAD) based on this is one of applications. The spectrum flux is used to describe a variation of a spectrum of an adjacent frame.

The value of the data feature of each piece of evaluation data in the evaluation data set may be calculated based on a manner or formula similar to that described above.

603: Divide the evaluation data in the evaluation data set into at least one evaluation data subset based on the value of the data feature of each piece of evaluation data in the evaluation data set.

After the value of the data feature of each piece of evaluation data in the evaluation data set is calculated, the evaluation data in the evaluation data set may be divided into at least one evaluation data subset based on distribution of the value of the data feature of each piece of evaluation data in the evaluation data set or based on a preset division threshold. That is, the evaluation data in the evaluation data set is classified based on the value of the data feature to obtain the evaluation data subset. There may be a plurality of data features of the evaluation data, and the evaluation data set may be divided based on each data feature. For example, when the task type is image classification, and the data features include brightness of an image and saturation of an image, after a brightness value and a saturation value of each image in the evaluation data set are calculated, the evaluation data in the evaluation data set may be divided into at least one evaluation data subset based on distribution of the brightness values, and the evaluation data in the evaluation data set may be divided into at least one evaluation data subset based on distribution of the saturation values. When being divided based on the distribution of the value of the data feature, the evaluation data in the evaluation data set may be divided based on a threshold, may be divided based on a percentage, or may be divided in another manner. This is not limited herein.

An example in which the evaluation data is divided based on the percentage is used for description. The data feature includes the brightness of the image, and the evaluation data set includes 100 images. The 100 images may be first sorted in descending or ascending order of brightness values of the images, and then the sorted 100 images are divided into four evaluation data subsets based on the percentage. Each of the four evaluation data subsets may include 25 images. When being divided based on the percentage, the evaluation data may be evenly divided, or may be unevenly divided.

An example in which the evaluation data is divided based on the threshold is used for description. The data feature includes the brightness of the image, and the evaluation data set includes 100 images. The 100 images may be first sorted in descending or ascending order of brightness values of the images. Then, images whose brightness values are greater than or equal to a first threshold may be grouped into a first evaluation data subset. Images whose brightness values are less than the first threshold and greater than or equal to a second threshold may be grouped into a second evaluation data subset. Images whose brightness values are less than the second threshold and greater than or equal to a third threshold may be grouped into a third evaluation data subset. Image whose brightness values are less than the third threshold may be grouped into a fourth evaluation data subset. The first threshold, the second threshold, and the third threshold decrease in sequence, and quantities of images included in the first data subset, the second data subset, the third data subset, and the fourth data subset may be the same or may be different.

Values of data features of all the evaluation data in each evaluation data subset obtained through division meet a same set of conditions. The condition may be that the values of the data features of all the evaluation data in the evaluation data subset are in a specific value range (for example, brightness values of the images of all the evaluation data are in a range of 0 to 20%), or that the values of the data features of all the evaluation data in the evaluation data subset meet a specific feature (for example, aspect ratios of the images of all the evaluation data is even).

In another embodiment, the evaluation data set may alternatively be divided based on the plurality of data features to obtain at least one evaluation data subset. Values of the plurality of data features of evaluation data in the obtained evaluation data subset meet a plurality of sub-conditions in a same set of conditions. That is, a value of each data feature of the evaluation data in the evaluation data subset meets a sub-condition corresponding to the data feature. For example, the evaluation data is images, and data features of the evaluation data include brightness of an image and an aspect ratio of an image. Images whose brightness in the evaluation data set is within a first threshold range and aspect ratios are within a second threshold range may be grouped into one evaluation data subset. That is, values of two data features corresponding to all the evaluation data in the evaluation data subset each meet a corresponding sub-condition. The evaluation data subset is a subset of the evaluation data set. That is, the evaluation data included in the evaluation data subset is some data in the evaluation data included in the evaluation data set.

604: Perform inference on the evaluation data in the at least one evaluation data subset by using the AI model to obtain an inference result.

After the AI model and the evaluation data set are obtained, or after the evaluation data in the evaluation data set is divided into the at least one evaluation data subset based on the distribution of the data feature value of each piece of evaluation data in the evaluation data set in the data feature, inference may be performed on the evaluation data in each of the at least one evaluation data subset by using the AI model to obtain the inference result. The evaluation data in each evaluation data subset may be input into the AI model to perform inference on the evaluation data in the evaluation data subset. The AI model may be invoked by using inference code to perform inference on the evaluation data in the evaluation data subset. The inference code may include invoking code used to invoke the AI model to perform inference on the evaluation data in the evaluation data subset. Before inference is performed on the evaluation data in the evaluation data subset by using the AI model, to ensure consistency of the evaluation data in some aspects, for example, when the evaluation data is images, to ensure consistency of image sizes, preprocessing may be first performed on the evaluation data in the evaluation data subset. The inference code may further include preprocessing code used to perform preprocessing on the evaluation data in the evaluation data subset. After inference is performed on the evaluation data in the evaluation data subset by using the AI model, an inference result may need to be processed. Optionally, the reasoning code may further include post-processing code used to perform post-processing on the inference result. The preprocessing code, the invoking code, and the post-processing code are executed in sequence. In the system architecture corresponding to FIG. 1, the inference code is developed based on the AI model. In the system architecture corresponding to FIG. 2, the inference code is provided by a customer.

It should be noted that, in other embodiments, when the AI model evaluation method is performed, the sequence of steps 603 and 604 may not be followed. Inference may be first performed on all the evaluation data in the evaluation data set by using the AI model, to obtain inference results of all evaluation data in the evaluation data set. Then, the evaluation data set is divided into at least one evaluation data subset based on the distribution of the values of the data feature of the evaluation data in the evaluation data set in the data feature, to obtain an inference result corresponding to the evaluation data in each evaluation data subset.

605: Compare an inference result of each piece of evaluation data with a label of each piece of evaluation data, and calculate inference accuracy of the AI model on each evaluation data subset based on a comparison result, to obtain an evaluation result.

After inference is performed on the evaluation data in the at least one evaluation data subset by using the AI model to obtain the inference result, the inference result of each piece of evaluation data may be first compared with the label of each piece of evaluation data. When an inference result of evaluation data is the same as a label of the evaluation data, it may be considered that the inference result of the AI model on the evaluation data is accurate and a comparison result is correct. When an inference result of evaluation data is different from a label of the evaluation data, it may be considered that the inference result of the AI model on the evaluation data is inaccurate and a comparison result is incorrect. The inference accuracy of the AI model on each evaluation data subset may be calculated based on the comparison result to obtain the evaluation result. When the evaluation result is obtained by calculating the inference accuracy of the AI model on each evaluation data subset based on the comparison result, an evaluation indicator value of the evaluation result of the AI model on the evaluation data in each of the at least one evaluation data subset in an evaluation indicator may be calculated based on the comparison result, to obtain an inference result. Accuracy may be measured by one or more evaluation indicators of the AI model.

When the task type is image classification, the evaluation indicators may include a confusion matrix, accuracy (accuracy), precision (precision), recall (recall), a receiver operating characteristic (receiver operating characteristic, ROC) curve, an F1 score (score), and the like. When the image classification is binary classification, classes may include a positive class and a negative class. Samples may be classified into true positive (true positive, TP), true negative (true negative, TN), false positive (false positive, FP), and false negative (false negative, FN) based on a real class and a predicted class. The TP is a quantity of samples whose classes predicted by the AI model are positive classes and real classes are positive classes, that is, a quantity of samples that are labeled by first labels as positive samples and whose inference results are positive samples. The TN is a quantity of samples whose classes predicted by the AI model are negative classes and real classes are negative classes, that is, a quantity of samples that are labeled by first labels as negative samples and whose inference results are negative samples. The FP is a quantity of samples whose classes predicted by the AI model are positive classes and real classes are negative classes, that is, a quantity of samples that are labeled by first labels as negative samples and whose inference results are positive samples. The FN is a quantity of samples whose classes predicted by the AI model are negative classes and real classes are positive classes, that is, a quantity of samples that are labeled by first labels as positive samples and whose inference results are negative samples. The confusion matrix includes the TP, the TN, the FP, and the FN. The confusion matrix may be shown in Table 1.

**Table 1 Confusion matrix**

| Real class | Predicted class | |
|---|---|---|
| | Positive class | Negative class |
| Positive class | TP | TN |
| Negative class | FP | FN |

The accuracy is a ratio of a quantity of correctly predicted samples to a total quantity of samples. When the image classification is binary classification, the accuracy AC may be represented as follows:

$$AC = \frac{TP+TN}{TP+FP+TN+FN}.$$

The precision is a ratio of a quantity of samples that are correctly predicted as positive to all samples that are predicted as positive. When the image classification is binary classification, the precision PR may be represented as follows:

$$PR = \frac{TP}{TP+FP}.$$

The recall is a ratio of a quantity of samples that are correctly predicted as positive to a quantity of all positive samples. When the image classification is binary classification, the recall RE may be represented as follows:

$$RE = \frac{TP}{TP+FN}.$$

The F1 score is a ratio of an arithmetic mean to a geometric mean, and the F1 score may be represented as follows:

$$F1 = \frac{2*PR*RE}{PR+RE}.$$

An ROC curve is a curve whose vertical axis is a true positive ratio (true positive ratio, TPR) and horizontal axis is a false positive ratio (false positive ratio, FPR). The TPR is a ratio of a quantity of samples whose predicted classes are positive and real classes are positive to a quantity of all samples whose real classes are positive. The FPR is a ratio of a quantity of samples whose predicted classes are positive and real classes are negative to a quantity of all samples whose real classes are negative. When the image classification is binary classification, the FPR and the TPR may be represented as follows:

$$FPR = \frac{FP}{FP+TN},$$

and

$$TPR = \frac{TP}{TP+FN}.$$

When the task type is object detection, the evaluation indicators may include mean average precision (mean average precision, mAP), a precision-recall (precision-recall, P-R) curve, and the like. The P-R curve is a curve whose horizontal coordinate is recall and vertical coordinate is precision. The mAP is a mean of average precision (average precision, AP), and the AP is an area surrounded by the P-R curve. The mAP and the AP may be represented as follows:

$$mAP = \frac{\sum_{q=1}^{Q} AP(q)}{Q},$$

and

$$AP(q) = \sum_{idx=2}^{N}(RE_{idx} - RE_{idx-1}) * PR_{idx}.$$

Q is a quantity of labels, AP(q) is average precision of the $q^{th}$ label, N is a predicted quantity of bounding boxes, $RE_{idx}$ is predicted recall of the $idx^{th}$ bounding box, $RE_{idx-1}$ is predicted recall of the $(idx-1)^{th}$ bounding box, and $PR_{idx}$ is predicted precision the $idx^{th}$ bounding box.

When the task type is text classification in a natural language, the evaluation indicators may include accuracy, precision, recall, an F1 score, and the like. When the task type is sound classification in audio, the evaluation indicators may include accuracy, precision, recall, an F1 score, and the like.

An evaluation indicator value in an evaluation indicator may be calculated according to the foregoing formula, or may be calculated in another manner. This is not limited herein. The evaluation result may include an evaluation indicator value of an inference result of the AI model on evaluation data in an evaluation data subset corresponding to each data feature in an evaluation indicator. For one evaluation indicator and one data feature, a plurality of data feature values in the data feature may correspond to one evaluation indicator value in the evaluation indicator. The evaluation result may further include a phenomenon obtained based on the evaluation indicator value of the inference result of the AI model on the evaluation data in the evaluation data subset corresponding to each data feature in the evaluation indicator. For example, brightness of an image has a relatively large impact on accuracy. For example, the task type is face detection, the data feature includes an area ratio of a bounding box to an image, the evaluation indicator includes recall, and the evaluation result may be shown in Table 2.

**Table 2 Evaluation result**

| The area ratio of a bounding box to an image | Recall |
|---|---|
| 0% to 20% | 0.5 |
| 20% to 50% | 0.76 |
| 50% to 75% | 0.8 |
| 75% to 100% | 0.9 |
| Conclusion: The area ratio of a bounding box to an image has a relatively large impact on the recall. | |

Optionally, after step 601 to step 605, the method may further include: generating an optimization suggestion for the AI model based on the evaluation result. The optimization suggestion may be that new data that meets a same set of conditions met by evaluation data in one or more evaluation data subsets is further added based on the current evaluation results of the AI model on the evaluation data subsets, to further train the AI model. Usually, inference accuracy of the current AI model on the one or more evaluation data subsets still does not meet a model requirement or inference accuracy of the current AI model on the one or more evaluation data subsets is lower than inference accuracy on another evaluation data subset. For example, an optimization suggestion for the evaluation result in Table 2 may be that the AI model is trained by using new data that meets a condition that the area ratio of a bounding box to an image is 0% to 20%. It should be understood that the new data that is obtained based on the optimization suggestion and that is further used for training may be re-collected data, or may be data obtained after a value of a data feature of data in original training data is adjusted.

Optionally, sensitivity of the data feature to the evaluation indicator may be determined based on the evaluation result. Specifically, regression analysis may be performed on the value of the data feature and the evaluation indicator value of the inference result of the AI model on the evaluation data in each evaluation data subset corresponding to each data feature in the evaluation indicator, to obtain the sensitivity of the data feature to the evaluation indicator. That is, regression analysis may be performed by using the value of the data feature as an input, and the evaluation indicator value of the inference result of the AI model on the evaluation data in each evaluation data subset corresponding to each data feature in the evaluation indicator as an output, to obtain the sensitivity of the data feature to the evaluation indicator. For example, linear regression $f(z_t) = W^T z_t$ is used. A set of values of data features is used as a vector $z_t$, for example, includes four dimensions: a brightness value, a definition value, a resolution value, and a saturation value of an image. The evaluation indicator value of the inference result of the AI model on the evaluation data in the evaluation data subset corresponding to the data feature in the evaluation indicator is used as $f(z_t)$. A fitted vector W is an impact weight of each data feature on each evaluation indicator, namely, the sensitivity.

After sensitivity of each data feature to each evaluation indicator is calculated, an optimization suggestion for the AI model may be generated based on the sensitivity of each data feature to each evaluation indicator. When the sensitivity is greater than a specific value, it may be considered that the data feature has a relatively large impact on the evaluation indicator, and a corresponding optimization suggestion may be generated for the phenomenon. For example, when brightness of an image has a relatively large impact on accuracy, an image whose brightness value is in one or more ranges is added to train the AI model. Because inference accuracy of the current AI model on the image in the one or more ranges can be still improved, after the current AI model continues to be trained with new data based on the optimization suggestion, an inference ability of the AI model can be improved with a relatively high probability.

Optionally, the method may further include: generating an evaluation report, and sending the evaluation report. The evaluation report may include at least one of the evaluation result and the optimization suggestion. The evaluation report including the evaluation result and/or the optimization suggestion may be generated after the inference accuracy of the AI model on each evaluation data subset is calculated based on the comparison result to obtain the evaluation result, and/or after the optimization suggestion for the AI model is generated based on the evaluation result.

Optionally, the method may further include: calculating overall inference accuracy of the AI model on the evaluation data set. Specifically, an inference result of the AI model on the evaluation data in the evaluation data set may be first determined, then the inference result of each piece of evaluation data is compared with the label of each piece of evaluation data, and finally, the inference accuracy of the AI model on the evaluation data set is calculated based on the comparison result, to obtain an evaluation result of the AI model on the global data. This is different from the foregoing. The evaluation data set does not need to be divided into a plurality of evaluation data subsets herein, but the evaluation data set is calculated as a whole. Because all evaluation data in the evaluation data set is data that is not specially selected, an overall inference capability of the AI model on the evaluation data set can be evaluated, to evaluate an inference capability of the AI model on the global data, that is, an inference capability of the AI model on any type of data that can be used as an input of the AI model. The global data in this application is data that is not classified based on any data feature, and may represent any type of data that can be used as an input of the AI model.

Optionally, the evaluation report may further include the inference accuracy of the AI model on the evaluation data set.

Optionally, the method may further include: obtaining a performance parameter. In a process of performing inference on the evaluation data in the evaluation data set by using the AI model, use information of hardware resources, use duration of an operator included in the AI model, and a use quantity of the operator may be monitored to obtain the performance parameter. In a process of performing inference on the evaluation data set by using the AI model, use information of hardware resources, use duration of an operator included in the AI model, and a use quantity of the operator may be monitored. The hardware resources may include a central processing unit (central processing unit, CPU), a graphics processing unit (graphics processing unit, GPU), a physical memory, a GPU memory, and the like. A performance monitoring process may be used to monitor the inference process. Specifically, a GPU performance monitoring tool such as an NVIDIA system management interface (system management interface, SMI) may be invoked to collect GPU usage and GPU memory occupation. A CPU performance monitoring tool such as topvmstatiostat may be invoked to collect CPU usage and memory occupation. An operator performance monitoring tool such as a profiler (profiler) tool may be invoked to collect the use duration of the operator included in the AI model and the use quantity of the operator.

Optionally, the optimization suggestion may further include an optimization suggestion generated based on the performance parameter. After the performance parameter is obtained, the optimization suggestion for the AI model may be generated based on the performance parameter. A performance optimization suggestion for the AI model may be generated based on the use information of the hardware resources, the use duration of the operator included in the AI model, the use quantity of the operator, and a performance optimization knowledge base. The performance optimization knowledge base may include a phenomenon corresponding to the use information of the hardware resources, a phenomenon corresponding to a usage status of the operator, and performance optimization manners corresponding to the phenomenon corresponding to the use information of the hardware resources and the phenomenon corresponding to the usage status of the operator. For example, when the phenomenon corresponding to the use information of the hardware resources is relatively high GPU memory consumption, the performance optimization suggestion may be that precision of a parameter of the AI model is adjusted to 8-bit quantization, or may be that operator fusion is enabled. For another example, when the phenomenon corresponding to the use information of the hardware resources is relatively high GPU memory consumption, the performance optimization manner corresponding to the phenomenon corresponding to the use information of the hardware resources may be adjusting precision of a parameter of the AI model to half-precision or int8 quantization.

Optionally, the foregoing steps may be performed for a plurality of times. That is, evaluation is performed for a plurality of times. Steps performed in the plurality of times are the same, and the difference is that used evaluation data sets are slightly different. For example, an evaluation data set used for the first time is a received evaluation data set uploaded by a user or sent by a terminal device, and a subsequently used evaluation data set is an evaluation data set adjusted for a data feature of the evaluation data in the received evaluation data set, but the evaluation data before and after adjustment does not affect a visual effect. The adjustment may be adding noise, or may be changing a brightness value of some data in the evaluation data, or may be adjusting another data feature of the evaluation data. This is not limited herein. Then the plurality of evaluation reports and optimization suggestions can be synthesized to obtain more accurate suggestions and reports, to improve evaluation robustness. For example, compared with the received evaluation data set, noise is added in an evaluation data set used for the second time, and compared with the first evaluation report, accuracy and precision of the second evaluation report are reduced. This indicates that noise has a relatively large impact on the AI model. Therefore, noise interference can be avoided as much as possible.

Optionally, in this embodiment of this application, evaluating the AI model may further invoke an engine-related tool, such as a profiler tool provided by the TensorFlow and a profiler tool provided by the MXNet, to analyze a structure of the AI model, the operator included in the AI model, time complexity of the operator, and space complexity of the operator. The structure of the AI model may include a residual structure, multi-level feature extraction, and the like. The optimization suggestion may further include a suggestion for structural modification of the AI model based on the foregoing analysis. For example, when the AI model does not include a batch normalization (batch normalization) layer, a suggestion for adding the BN layer may be generated due to a risk of overfitting. For another example, when the structure of the AI model includes multi-level feature extraction for classification, and to-be-recognized bounding boxes are in a plurality of sizes, the bounding boxes in all the sizes may not be recognized, and only bounding boxes in some sizes can be recognized. The time complexity and the space complexity of the operator may be linear complexity, or may be exponential complexity. When the space complexity of the operator is exponential complexity, it indicates that the structure of the AI model is relatively complex, and a suggestion of clipping may be generated. That is, the structure of the AI model is adjusted.

The suggestions and reports may be provided for the user through a GUI, or may be provided for the user by using a java script object notation (java script object notation, JSON) document, or may be sent to a terminal device of the user.

FIG. 8 is a schematic flowchart of another AI model evaluation method according to an embodiment of this application. The AI model evaluation method is performed by an evaluation system. As shown in FIG. 8, the AI model evaluation method may include the following steps.

801: Obtain an AI model and an evaluation data set.

For detailed description of step 801, refer to step 601.

802: Perform inference on evaluation data in the evaluation data set by using the AI model.

For detailed description of step 802, refer to step 604. Step 802 is different from step 604, and the difference is that inference is performed on the evaluation data in the evaluation data set, and the evaluation data in the evaluation data set does not need to be divided in step 802, but in step 604, to perform inference on the evaluation data in the at least one evaluation data subset obtained after the evaluation data in the evaluation data set is divided, the evaluation data in the evaluation data set first needs to be divided into the at least one evaluation data subset.

803: Obtain performance data.

In a process of performing inference on the evaluation data in the evaluation data set by using the AI model, performance of hardware, namely, use information of hardware resources, use duration of an operator included in the AI model, and a use quantity of the operator may be monitored to obtain a performance parameter. That is, the performance data is used to indicate performance of hardware that performs inference in a process of performing inference on the evaluation data by using the AI model, or a usage status of the operator included in the AI model in the process of performing inference on the evaluation data by using the AI model. The usage status of the operator indicates use duration of each operator in the AI model or a use quantity of each operator in the AI model in the inference process. For detailed description of step 803, refer to the foregoing related description.

804: Generate an optimization suggestion for the AI model based on the performance data.

After the performance data is obtained, the optimization suggestion for the AI model may be generated based on the performance data. The optimization suggestion may include: adjusting a structure of the AI model, or performing optimization training on the operator in the AI model. For detailed description of step 804, refer to the foregoing related description.

Optionally, the method may further include: generating an evaluation report, and sending the evaluation report. After the optimization suggestion for the AI model is generated based on the performance data, the evaluation report may be generated and sent. The evaluation report may be sent to a terminal device, or may be sent to a mailbox of a user, or the like. The evaluation report may include at least one of the performance data and the optimization suggestion.

Optionally, the method may further include: calculating inference accuracy of the AI model on the evaluation data set. Specifically, an inference result of the AI model on the evaluation data in the evaluation data set may be first determined, then an inference result of each piece of evaluation data is compared with a label of each piece of evaluation data, and finally, the inference accuracy of the AI model on the evaluation data set is calculated based on a comparison result. For detailed descriptions, refer to the foregoing related descriptions.

With reference to a specific example, the foregoing steps are performed below when the evaluation data in the evaluation data set is microbial images and the task type of the AI model is object detection. After inference is performed on the evaluation data in the evaluation data set by using the AI model, the inference result includes detected epithelial cells, blastospores, cocci, white blood cells, spores, fungi, and clue cells. When the data feature includes brightness of an image and the evaluation indicator includes F1 scores, the evaluation result in the evaluation report may include FI scores of the AI model on evaluation data of four evaluation data subsets divided based on distribution of brightness values. This may be shown in Table 3:

**Table 3 FI scores of the four evaluation data subsets divided based on the distribution of brightness values**

| Distribution range | Epithelial cells | Blastospores | Cocci | White blood cells | Spores | Fungi | Clue cells | mAP |
|---|---|---|---|---|---|---|---|---|
| 0 to 25% | 0.6437 | 0.6876 | 0.0274 | 0.5005 | 0.7976 | 0.5621 | 0.5638 | 0.5404 |
| 25% to 50% | 0.425 | 0.5359 | | 0.6904 | 0.746 | 0.5651 | 0.106 | 0.5114 |
| 50% to 75% | 0.413 | 0.5414 | 0.0334 | 0.6456 | 0.7263 | 0.5543 | 0.1429 | 0.4367 |
| 75% to 100% | 0.5084 | 0.4632 | | 0.6818 | 0.6744 | 0.5683 | 0.2065 | 0.5171 |
| STD | 0.092 | 0.081 | 0.0003 | 0.076 | 0.044 | 0.005 | 0.182 | 0.039 |

As shown in Table 3, in step 603, the microbial images may be arranged in an ascending order or in a descending order of brightness values. Then, top 25% evaluation data (that is, 0 to 25%) is determined as a first evaluation data subset, next 25% evaluation data (that is, 25% to 50%) is determined as a second evaluation data subset, next 25% evaluation data (that is, 50% to 75%) is determined as a third evaluation data subset, and last 25% evaluation data (that is, 75% to 100%) is determined as a fourth evaluation data subset. Then, the F1 scores of the epithelial cells, the blastospores, the cocci, the white blood cells, the spores, the fungi, and the clue cells in the first evaluation data subset to the fourth evaluation data subset are calculated in step 605. In addition, in step 605, after the F1 scores of the epithelial cells, the blastospores, the cocci, the white blood cells, the spores, the fungi, and the clue cells in the first evaluation data subset to the fourth evaluation data subset are calculated, mAP of the F1 scores of the epithelial cells, the blastospores, the cocci, the white blood cells, the spores, the fungi, and the clue cells in the first evaluation data subset to the fourth evaluation data subset are calculated, and standard deviations STDs, namely sensitivity, of the F1 scores of the epithelial cells, the blastospores, the cocci, the white blood cells, the spores, the fungi, and the clue cells in all the evaluation data are calculated. It can be concluded from Table 3 that the brightness of the image has a relatively large impact on the epithelial cells and the clue cells. Correspondingly, a suggestion for increasing images whose brightness values are between 25% and 50% and between 50% and 75% to train the AI model may be provided. When the data feature includes sizes of bounding boxes and the evaluation indicator includes F1 scores, the evaluation result in the evaluation report may include FI scores of the AI model on evaluation data of four evaluation data subsets divided based on distribution of sizes of bounding boxes. This may be shown in Table 4:

**Table 4 F1 scores of the four evaluation data subsets divided based on the distribution of sizes of bounding boxes**

| Distribution range | Epithelial cells | Blastospores | Cocci | White blood cells | Spores | Fungi | Clue cells | mAP |
|---|---|---|---|---|---|---|---|---|
| 0 to 25% | 0.1012 | 0.4669 | 0.0208 | 0.7489 | 0.6237 | 0.5368 | | 0.4164 |
| 25% to 50% | 0.4666 | 0.5809 | 0.0344 | 0.6462 | 0.7495 | 0.5352 | 0.0172 | 0.4329 |
| 50% to 75% | 0.5729 | 0.46 | 0.0185 | 0.5625 | 0.7424 | 0.5793 | 0.1669 | 0.4432 |
| 75% to 100% | 0.6179 | 0.6832 | | 0.5236 | 0.7928 | 0.5177 | 0.3882 | 0.5033 |
| STD | 0.203 | 0.0918 | 0.0123 | 0.0865 | 0.0628 | 0.0227 | 0.1524 | 0.0328 |

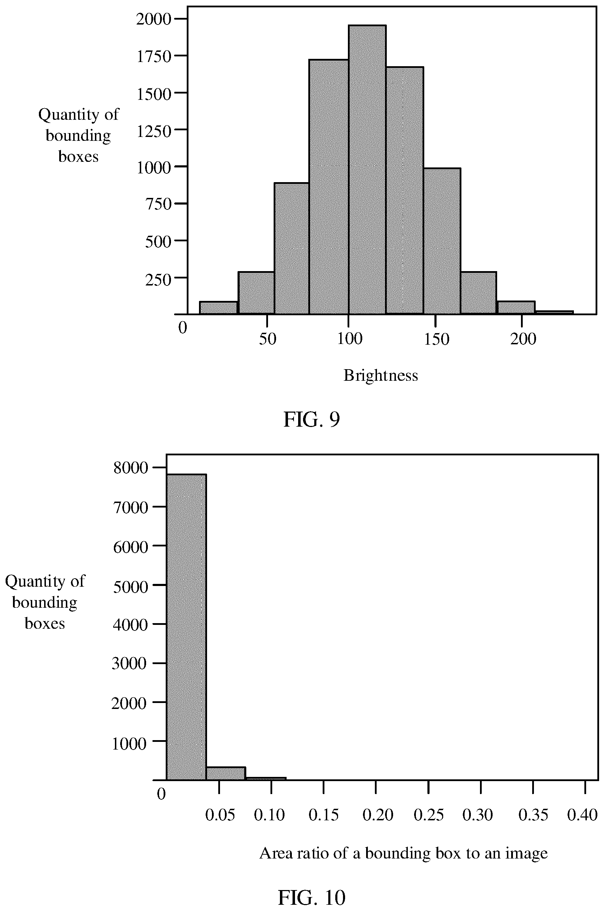

A process of Table 4 is similar to that of Table 3, and details are not described herein again. It can be concluded from Table 4 that a size of a bounding box has a relatively large impact on the epithelial cells and the clue cells. Correspondingly, images whose sizes of bounding boxes are between 0 and 25%, 25% and 50%, and 50% and 75% may be increased to train the AI model. FIG. 9 is a distribution diagram of brightness of bounding boxes for microbial detection according to an embodiment of this application. As shown in FIG. 9, most brightness of areas in which the bounding boxes are located is concentrated between 50 and 170. FIG. 10 is a distribution diagram of area ratios of a bounding box to an image for microbial detection according to an embodiment of this application. As shown in FIG. 10, the area ratios of a bounding box to an image are mostly concentrated between 0 and 0.05. The evaluation report may further include performance data, and use information of hardware resources in the obtained performance data may be shown in Table 5.

**Table 5 Use information of hardware resources**

| Use information of hardware resources | Peak value | Average value |
|---|---|---|
| GPU Usage | 65% | 30% |
| CPU Usage | 60% | 40% |
| Physical memory | 390 M | 270 M |
| GPU memory | 1570 M | 1240 M |

It can be concluded from Table 5 that a large amount of GPU memory is consumed. Correspondingly, a suggestion for adjusting parameter precision in the AI model to half-precision or int8 quantization may be provided. For usage statuses of operators in the obtained performance data, refer to Table 6.

**Table 6 Usage statuses of operators**

| Operator | Total use duration | Average use duration | Amount used |
|---|---|---|---|
| Detection box generation (contrib_Proposal) | 1329.748 ms | 120.886 ms | 11 |
| Convolution (convolution) and activation (activation) | 1221.938 ms | 9.257 ms | 132 |
| Convolution, activation, and pooling (pooling) | 1162.373 ms | 23.722 ms | 49 |
| Fully connected (fully connected) and activation | 260.557 ms | 13.028 ms | 20 |
| Softmax (softmax) | 138.426 ms | 12.584 ms | 11 |
| Dimension flatten (flatten) | 130.858 ms | 13.086 ms | 10 |
| Reshape (reshape) | 32.838 ms | 2.985 ms | 11 |

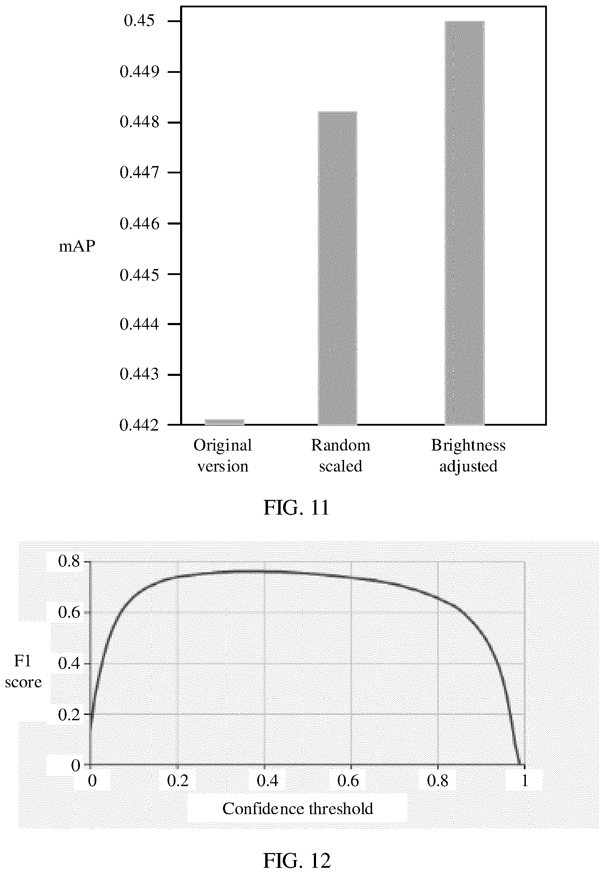

It can be concluded from Table 6 that the detection box generation operator consumes more time. Correspondingly, a suggestion for optimizing the detection box generation operator may be provided. After evaluation is performed once, the AI model corresponding to the microbial cells may be retrained based on the foregoing suggestion. FIG. 11 is a schematic diagram of mAP before and after the retraining of the AI model corresponding to the microbial cells according to an embodiment of this application. As shown in FIG. 11, mAP before the retraining is 0.4421. After the image is randomly scaled, mAP after the retraining is 0.4482, and after the brightness of the image is adjusted, the mAP after the retraining is 0.45. It can be learned that the retrained AI model is better than the AI model that is not retrained.

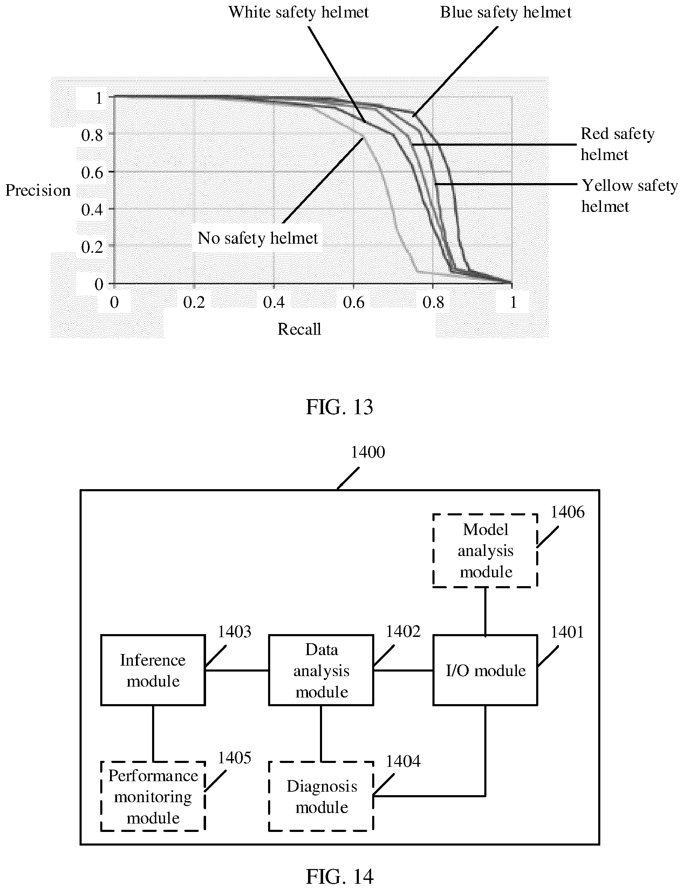

With reference to a specific example, the foregoing steps are performed below when the evaluation data in the evaluation data set is person images and the task type of the trained AI model is object detection. After inference is performed on the evaluation data in the evaluation data set by using the AI model, the inference results include five types: no safety helmet, white safety helmet, yellow safety helmet, red safety helmet, and blue safety helmet. FIG. 12 shows a curve of an FI score and a confidence threshold of an AI model used for safety helmet detection according to an embodiment of this application. The F1 score is calculated based on the step of calculating the inference accuracy of the AI model on each evaluation data subset based on the comparison result to obtain the evaluation result. As shown in FIG. 12, as the confidence threshold increases, the F1 score first increases and then decreases. When the confidence threshold is 0.37, the F1 score is the largest. Therefore, the confidence threshold may be set to 0.37. FIG. 13 shows a P-R curve of an AI model used for safety helmet detection according to an embodiment of this application. The P-R curve is calculated based on the step of calculating the inference accuracy of the AI model on each evaluation data subset based on the comparison result to obtain the evaluation result. As shown in FIG. 13, P-R curves of the five types of detection results are different. When the data feature includes blurriness and the evaluation indicator includes recall, the evaluation report may include recall values of the AI model on evaluation data of four evaluation data subsets divided based on distribution of blurriness. This may be shown in Table 7.

**Table 7 Recall values of the evaluation data of the four evaluation data subsets divided based on the distribution of blurriness**

| Distribution range | Blue safety helmet | No safety helmet | Red safety helmet | Yellow safety helmet | White safety helmet | mAP |
|---|---|---|---|---|---|---|
| 0 to 15% | 0.8275 | 0.6893 | 0.8066 | 0.8828 | 0.7428 | 0.7898 |
| 15% to 50% | 0.829 | 0.7349 | 0.7824 | 0.7968 | 0.7558 | 0.7798 |
| 50% to 85% | 0.8422 | 0.5942 | 0.7546 | 0.7735 | 0.7543 | 0.7438 |
| 85% to 100% | 0.8171 | 0.6467 | 0.7746 | 0.763 | 0.6925 | 0.7391 |
| STD | 0.0089 | 0.052 | 0.0185 | 0.0471 | 0.0258 | 0.022 |

It may be learned from Table 7 that blurriness of an image has a relatively large impact on "no safety helmet". Correspondingly, a suggestion for increasing an image whose blurriness is between 50% and 85% and between 85% and 100% to train the AI model may be provided. When the data feature includes a quantity of bounding boxes and the evaluation indicator includes recall, the evaluation report may include recall values of the AI model on evaluation data of four evaluation data subsets divided based on distribution of quantities of bounding boxes. This may be shown in Table 8:

**Table 8 Recall values of the evaluation data of the four evaluation data subsets divided based on the distribution of quantities of bounding boxes**

| Distribution range | Blue safety helmet | No safety helmet | Red safety helmet | Yellow safety helmet | White safety helmet | mAP |
|---|---|---|---|---|---|---|
| 0 to 15% | 0.9499 | 0.8865 | 0.8581 | 0.9609 | 0.8455 | 0.9002 |
| 15% to 50% | 0.9524 | 0.7492 | 0.8664 | 0.904 | 0.9109 | 0.8766 |
| 50% to 85% | 0.8061 | 0.8065 | 0.8318 | 0.8154 | 0.8069 | 0.8133 |
| 85% to 100% | 0.737 | 0.589 | 0.6987 | 0.6474 | 0.6387 | 0.6622 |
| STD | 0.0931 | 0.109 | 0.0676 | 0.1185 | 0.1005 | 0.0927 |

It can be learned from Table 8 that blurriness of an image has a relatively large impact on "no safety helmet", "yellow safety helmet", and "white safety helmet". Correspondingly, a suggestion for increasing an image whose quantity of bounding boxes is between 85% and 100% to train the AI model may be provided.

FIG. 14 is a schematic diagram of a structure of another evaluation system 1400 according to an embodiment of this application. As shown in FIG. 14, the evaluation system 1400 may include an I/O module 1401, a data analysis module 1402, and an inference module 1403.

Optionally, the evaluation system 1400 may further include a diagnosis module 1404.

Optionally, the evaluation system 1400 may further include a performance monitoring module 1405.

Optionally, the evaluation system 1400 may further include a model analysis module 1406.

For detailed descriptions of the I/O module 1401, the data analysis module 1402, the inference module 1403, the performance monitoring module 1405, and the model analysis module 1406 in the evaluation system 1400, refer to the method embodiment corresponding to FIG. 6.

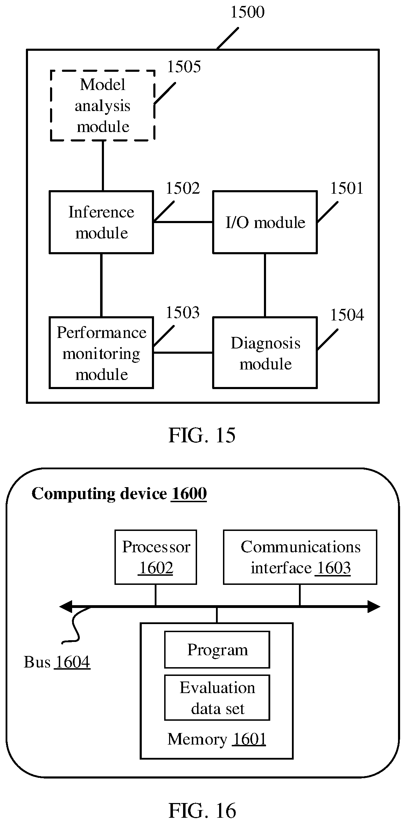

FIG. 15 is a schematic diagram of a structure of still another evaluation system 1500 according to an embodiment of this application. As shown in FIG. 15, the evaluation system 1500 may include an I/O module 1501, an inference module 1502, a performance monitoring module 1503, and a diagnosis module 1504.

Optionally, the evaluation system 1500 may further include a model analysis module 1505.

For detailed descriptions of the I/O module 1501, the inference module 1502, the performance monitoring module 1503, the diagnosis module 1504, and the model analysis module 1505 in the evaluation system 1500, refer to the method embodiment corresponding to FIG. 8.

FIG. 16 is a schematic diagram of a structure of a computing device according to an embodiment of this application. As shown in FIG. 16, a computing device 1600 includes a memory 1601, a processor 1602, a communications interface 1603, and a bus 1604. Communication connections between the memory 1601, the processor 1602, and the communications interface 1603 are implemented through the bus 1604.

The memory 1601 may be a read only memory (read only memory, ROM), a static storage device, a dynamic storage device, or a random access memory (random access memory, RAM). The memory 1601 may store a program. When the program stored in the memory 1601 is executed by the processor 1602, the processor 1602 and the communications interface 1603 are configured to execute the method for evaluating the AI model by the user in FIG. 6 or FIG. 8. The memory 1601 may further store an evaluation data set.

The processor 1602 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits.

The communications interface 1603 uses a transceiver module, for example but not for limitation, a transceiver, to implement communication between the computing device 1600 and another device or a communications network. For example, the evaluation data set may be obtained through the communications interface 1603.

The bus 1604 may include a path for transmitting information between various components (for example, the memory 1601, the processor 1602, and the communications interface 1603) of the computing device 1600.

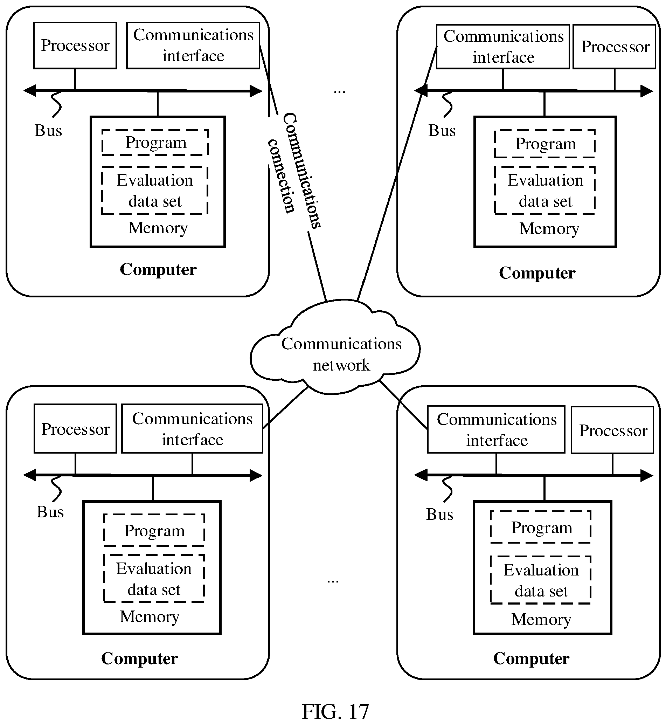

The modules in the evaluation system 500, the evaluation system 1400, and the evaluation system 1500 provided in this application may be distributed on a plurality of computers in a same environment or different environments. Therefore, FIG. 17 is a schematic diagram of a structure of another computing device according to an embodiment of this application. As shown in FIG. 17, the computing device includes a plurality of computers, and each computer includes a memory, a processor, a communications interface, and a bus. Communication connections between the memory, the processor, and the communications interface are implemented through the bus.

The memory may be a ROM, a static storage device, a dynamic storage device, or a RAM. The memory may store a program. When the program stored in the memory is executed by the processor, the processor and the communications interface are configured to perform a part of a method used by an evaluation system to evaluate an AI model for a user. The memory may further store an evaluation data set. For example, some storage resources in the memory are divided into a data set storage module, configured to store an evaluation data set required by the evaluation system, and some storage resources in the memory are divided into a result storage module, configured to store an evaluation report.

The processor may use a common CPU, a microprocessor, an ASIC, a GPU, or one or more integrated circuits.

The communications interface uses a transceiver module, for example but not for limitation, a transceiver, to implement communication between the computer and another device or a communications network. For example, the evaluation data set may be obtained through the communications interface.

The bus may include a path for transmitting information between components (for example, the memory, the processor, and the communications interface) of the computer.

A communications channel is established between the computers by using a communications network. Each computer runs any one or more modules of the evaluation system 500, the evaluation system 1400, and the evaluation system 1500. Any computer may be a computer (for example, a server) in a cloud data center, a computer in an edge data center, or a terminal computing device.

A description of a procedure corresponding to each of the accompanying drawings has a focus. For a part that is not described in detail in a procedure, refer to a related description of another procedure.

All or some of the foregoing embodiments may be implemented by using software, hardware, firmware, or any combination thereof. When software is used to implement the embodiments, all or some of the embodiments may be implemented in a form of a computer program product. A computer program product for evaluation includes one or more computer instructions for evaluation. When these computer program instructions are loaded and executed on a computer, a process or a function described in FIG. 6 or FIG. 8 according to the embodiments of the present invention is completely or partially generated.

The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores a readable storage medium that provides computer program instructions for evaluation. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium (for example, an SSD).

**Claims**

1. An artificial intelligence AI model evaluation method, comprising:

   obtaining, by a computing device, an AI model and an evaluation data set, wherein the evaluation data set comprises a plurality of pieces of evaluation data carrying labels, and a label of each piece of evaluation data is used to indicate a real result corresponding to the evaluation data;
   classifying, by the computing device, the evaluation data in the evaluation data set based on a data feature, to obtain an evaluation data subset, wherein the evaluation data subset is a subset of the evaluation data set, and values of the data feature of all evaluation data in the evaluation data subset meet a condition; and
   determining, by the computing device, an inference result of the AI model on the evaluation data in the evaluation data subset, comparing an inference result of each piece of evaluation data in the evaluation data subset with a label of each piece of evaluation data in the evaluation data subset, and calculating inference accuracy of the AI model on the evaluation data subset based on a comparison result, to obtain an evaluation result of the AI model on data whose value of the data feature meets the condition.

2. The method according to claim 1, wherein the method further comprises:
   generating, by the computing device, an optimization suggestion for the AI model, wherein the optimization suggestion comprises: training the AI model with new data whose value of the data feature meets the condition.

3. The method according to claim 1 or 2, wherein the method further comprises:
   obtaining, by the computing device, performance data, wherein the performance data indicates performance of hardware that performs inference in a process of performing inference on the evaluation data by using the AI model, and/or a usage status of an operator comprised in the AI model in the process of performing inference on the evaluation data by using the AI model.

4. The method according to any one of claims 1 to 3, wherein the method further comprises:

   determining, by the computing device, an inference result of the AI model on the evaluation data in the evaluation data set; and
   calculating, by the computing device, inference accuracy of the AI model on the evaluation data set based on a comparison result of the inference result on the evaluation data in the evaluation data set and the label of the evaluation data in the evaluation data set, to obtain an evaluation result of the AI model on the global data.

5. The method according to any one of claims 1 to 4, wherein there are a plurality of data features, the condition comprises a plurality of sub-conditions, and the plurality of data features one-to-one correspond to the plurality of sub-conditions; and
   the classifying, by the computing device, the evaluation data in the evaluation data set based on a data feature, to obtain an evaluation data subset comprises:
classifying, by the computing device, the evaluation data in the evaluation data set based on the plurality of data features to obtain an evaluation data subset, wherein each of values of the plurality data features of all the evaluation data in the evaluation data subset meets a corresponding sub-condition in the condition.

6. The method according to any one of claims 1 to 5, wherein the evaluation data in the evaluation data set is images or audio.

7. An artificial intelligence AI model evaluation method, comprising:

obtaining, by a computing device, an AI model and an evaluation data set, wherein the evaluation data set comprises a plurality of pieces of evaluation data carrying labels, and a label of each piece of evaluation data is used to indicate a real result corresponding to the evaluation data;
performing, by the computing device, inference on the evaluation data in the evaluation data set by using the AI model;
obtaining, by the computing device, performance data, wherein the performance data indicates performance of hardware that performs inference in a process of performing inference on the evaluation data by using the AI model, and/or a usage status of an operator comprised in the AI model in the process of performing inference on the evaluation data by using the AI model; and
generating, by the computing device, an optimization suggestion for the AI model based on the performance data, wherein the optimization suggestion comprises: adjusting a structure of the AI model, and/or performing optimization training on the operator in the AI model.

8. The method according to claim 7, wherein the usage status of the operator comprised in the AI model in the process of performing inference on the evaluation data by using the AI model comprises: use duration of the operator in the AI model and a use quantity of the operator in the AI model.

9. The method according to claim 7 or 8, wherein the evaluation data in the evaluation data set is images or audio.

10. An artificial intelligence AI model evaluation system, wherein the system comprises:

an input/output I/O module, configured to obtain an AI model and an evaluation data set, wherein the evaluation data set comprises a plurality of pieces of evaluation data carrying labels, and a label of each piece of evaluation data is used to indicate a real result corresponding to the evaluation data;
a data analysis module, configured to classify the evaluation data in the evaluation data set based on a data feature, to obtain an evaluation data subset, wherein the evaluation data subset is a subset of the evaluation data set, and values of the data feature of all evaluation data in the evaluation data subset meet a condition; and
an inference module, configured to determine an inference result of the AI model on the evaluation data in the evaluation data subset, wherein
the data analysis module is further configured to compare an inference result of each piece of evaluation data in the evaluation data subset with a label of each piece of evaluation data in the evaluation data subset, and calculate inference accuracy of the AI model on the evaluation data subset based on a comparison result, to obtain an evaluation result of the AI model on data whose value of the data feature meets the condition.

11. The system according to claim 10, wherein the system further comprises:
a diagnosis module, configured to generate an optimization suggestion for the AI model, wherein the optimization suggestion comprises: training the AI model with new data whose value of the data feature meets the condition.

12. The system according to claim 10 or 11, wherein the system further comprises:
a performance monitoring module, configured to obtain performance data, wherein the performance data indicates performance of hardware that performs inference in a process of performing inference on the evaluation data by using the AI model, and/or a usage status of an operator comprised in the AI model in the process of performing inference on the evaluation data by using the AI model.

13. The system according to any one of claims 10 to 12, wherein the inference module is further configured to determine an inference result of the AI model on the evaluation data in the evaluation data set; and
the system further comprises:
a model analysis module, configured to calculate inference accuracy of the AI model on the evaluation data set based on a comparison result of the inference result on the evaluation data in the evaluation data set and the label of the evaluation data in the evaluation data set, to obtain an evaluation result of the AI model on the global data.

14. The system according to any one of claims 10 to 13, wherein there are a plurality of data features, the condition comprises a plurality of sub-conditions, and the plurality of data features one-to-one correspond to the plurality of sub-conditions; and
the data analysis module is specifically configured to classify the evaluation data in the evaluation data set based on the plurality of data features to obtain an evaluation data subset, wherein each of values of the plurality data features of all the evaluation data in the evaluation data subset meets a corresponding sub-condition in the condition.

15. The system according to any one of claims 10 to 14, wherein the evaluation data in the evaluation data set is images or audio.

16. An artificial intelligence AI model evaluation system, wherein the system comprises:

an input/output I/O module, configured to obtain an AI model and an evaluation data set, wherein the evaluation data set comprises a plurality of pieces of evaluation data carrying labels, and a label of each piece of evaluation data is used to indicate a real result corresponding to the evaluation data;
an inference module, configured to perform inference on the evaluation data in the evaluation data set by using the AI model;
a performance monitoring module, configured to obtain performance data, wherein the performance data is used to indicate performance of hardware that performs inference in a process of performing inference on the evaluation data by using the AI model, or a usage status of an operator comprised in the AI model in a process of performing inference on the evaluation data by using the AI model; and
a diagnosis module, configured to generate an optimization suggestion for the AI model based on the performance data, wherein the optimization suggestion comprises: adjusting a structure of the AI model, and/or performing optimization training on the operator in the AI model.

17. The system according to claim 16, wherein the usage status of the operator comprised in the AI model in the process of performing inference on the evaluation data by using the AI model comprises: use duration of the operator in the AI model and a use quantity of the operator in the AI model.

18. The system according to claim 16 or 17, wherein the evaluation data in the evaluation data set is images or audio.

19. A computing device, wherein the computing device comprises a memory and a processor, and the memory is configured to store a group of computer instructions; and
the processor executes the group of computer instructions stored in the memory, to perform the method according to any one of claims 1 to 9.

20. A computer-readable storage medium, wherein the computer-readable storage medium stores computer program code, and when the computer program code is executed by a computing device, the computing device performs the method according to any one of claims 1 to 9.

System
architecture 100

AI platform

Terminal
device 13

Training
system 11

Evaluation
system 12

FIG. 1

System
architecture 200

Terminal
device
21

Evaluation
system
22

FIG. 2

Cloud data center

Evaluation
system

Cloud
service
platform

Evaluate a
cloud service

**Cloud
environment**

Purchase a
cloud
service

Provide an
evaluation
cloud service

User

FIG. 3

FIG. 4

500

Result storage module 508

Diagnosis module 507

Model analysis module 505

Data analysis module 506

Inference module 503

Data set storage module 502

Performance monitoring module 504

I/O module 501

FIG. 5

EP 4 024 297 A1

| | 601 |
| Receive an AI model and an evaluation data set | |

↓

| | 602 |
| Calculate a value of a data feature of each piece of evaluation data in the evaluation data set | |

↓

| | 603 |
| Divide the evaluation data in the evaluation data set into at least one evaluation data subset based on the value of the data feature of each piece of evaluation data in the evaluation data set | |

↓

| | 604 |
| Perform inference on evaluation data in the at least one evaluation data subset by using the AI model to obtain an inference result | |

↓

| | 605 |
| Compare an inference result of each piece of evaluation data with a label of each piece of evaluation data, and calculate inference accuracy of the AI model on each evaluation data subset based on a comparison result, to obtain an evaluation result | |

FIG. 6

29

| Data set | |
| Model type | |
| Model source | |
| Inference code | |

**FIG. 7**

| Obtain an AI model and an evaluation data set | 801 |

↓

| Perform inference on evaluation data in the evaluation data set by using the AI model | 802 |

↓

| Obtain performance data | 803 |

↓

| Generate an optimization suggestion for the AI model based on the performance data | 804 |

**FIG. 8**

FIG. 9

FIG. 10

FIG. 11

FIG. 12

FIG. 13

FIG. 14

1500

Model analysis module 1505

Inference module 1502

I/O module 1501

Performance monitoring module 1503

Diagnosis module 1504

FIG. 15

Computing device **1600**

Processor 1602

Communications interface 1603

Bus 1604

Program

Evaluation data set

Memory 1601

FIG. 16

FIG. 17

## INTERNATIONAL SEARCH REPORT

| International application No. |
| --- |
| **PCT/CN2020/097651** |

**A. CLASSIFICATION OF SUBJECT MATTER**

G06N 20/10(2019.01)i

According to International Patent Classification (IPC) or to both national classification and IPC

**B. FIELDS SEARCHED**

Minimum documentation searched (classification system followed by classification symbols)

G06F;G06N

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS, USTXT, EPTXT, IEEE: AI, 人工智能, 机器学习, 深度学习, 支持向量机, 决策树, 模型, 算法, 引擎, 评估, 评测, 测评, 测试, 评价, 优化, 推理, 数据集, 测试集, 评估集, 测试数据集, 评估数据集, 子集, 多个, 多组, 每组, 各组, 特征, 敏感, 影响, 性能, 硬件, 资源, 内存, 显存, GPU, 时间, 时长, 速度, 效率; artificial intelligence, machine learning, deep, model, algorithm, engine, estimate, evaluate, test, optimize, reasoning, inference, dataset, sub, multiple, groups, characteristic, feature, sensitive, performance, hardware, resource, memory, display, last, duration, speed, efficiency

**C. DOCUMENTS CONSIDERED TO BE RELEVANT**

| Category* | Citation of document, with indication, where appropriate, of the relevant passages | Relevant to claim No. |
| --- | --- | --- |
| Y | CN 110135592 A (TENCENT TECHNOLOGY SHENZHEN CO., LTD.) 16 August 2019 (2019-08-16)<br>description paragraphs [0002]-[0109], figures 1-5 | 1-6, 10-15, 19-20 |
| Y | CN 109376419 A (BEIJING BYTEDANCE NETWORK TECHNOLOGY CO., LTD.) 22 February 2019 (2019-02-22)<br>description paragraphs [0074]-[0085] | 1-6, 10-15, 19-20 |
| Y | CN 106250986 A (THE BOEING COMPANY) 21 December 2016 (2016-12-21)<br>description paragraphs [0016]-[0061] | 3-6, 12-15, 19-20 |
| X | CN 106250986 A (THE BOEING COMPANY) 21 December 2016 (2016-12-21)<br>description paragraphs [0016]-[0061] | 7-9, 16-20 |
| Y | CN 110210558 A (BEIJING SENSETIME TECHNOLOGY DEVELOPMENT CO., LTD.) 06 September 2019 (2019-09-06)<br>description paragraphs [0074]-[0116] | 3-6, 12-15, 19-20 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 August 2020** | **24 August 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

# EP 4 024 297 A1

**INTERNATIONAL SEARCH REPORT**

International application No.

**PCT/CN2020/097651**

| C. | DOCUMENTS CONSIDERED TO BE RELEVANT | |
|---|---|---|
| Category* | Citation of document, with indication, where appropriate, of the relevant passages | Relevant to claim No. |
| X | CN 110210558 A (BEIJING SENSETIME TECHNOLOGY DEVELOPMENT CO., LTD.) 06 September 2019 (2019-09-06) description paragraphs [0074]-[0116] | 7-9, 16-20 |
| A | US 2016232457 A1 (SKYTREE INC.) 11 August 2016 (2016-08-11) entire description | 1-20 |

Form PCT/ISA/210 (second sheet) (January 2015)

INTERNATIONAL SEARCH REPORT
Information on patent family members

International application No.

**PCT/CN2020/097651**

| Patent document cited in search report | | | Publication date (day/month/year) | Patent family member(s) | | | Publication date (day/month/year) |
|---|---|---|---|---|---|---|---|
| CN | 110135592 | A | 16 August 2019 | None | | | |
| CN | 109376419 | A | 22 February 2019 | None | | | |
| CN | 106250986 | A | 21 December 2016 | EP | 3101599 | A2 | 07 December 2016 |
| | | | | EP | 3101599 | A3 | 15 March 2017 |
| | | | | KR | 20160143512 | A | 14 December 2016 |
| | | | | JP | 2017004509 | A | 05 January 2017 |
| | | | | US | 2016358099 | A1 | 08 December 2016 |
| CN | 110210558 | A | 06 September 2019 | None | | | |
| US | 2016232457 | A1 | 11 August 2016 | WO | 2017058932 | A1 | 06 April 2017 |
| | | | | WO | 2016130858 | A1 | 18 August 2016 |

Form PCT/ISA/210 (patent family annex) (January 2015)